# EUROPEAN PATENT APPLICATION

(11) **EP 4 831 777 A1**
(43) Date of publication of application: **28.10.2026**
(21) Application number: 26174087.2
(22) Date of filing: 22.04.2026
(51) Int. Cl.: G06F 3/01, G06F 3/04815, G06T 19/00

(54) **SPATIAL PRESENTATION OF WEB CONTENT**

(30) Priority: 24.04.2025 US 202563794221 P; 06.04.2026 US 202619639995
(71) Applicant: Apple Inc., Cupertino, CA 95014 (US)
(72) Inventor: CANNON, Ada Rose, Cupertino, California, 95014 (US); ZACHERNUK, Brandel C., Cupertino, California, 95014 (US); PUGH, Chelsea E., Cupertino, California, 95014 (US); FULLER, Ryan S., Oakley, California, 94561 (US); AKULA, Sadhika, Cupertino, California, 95014 (US); JACKSON, Dean, Cupertino, California, 95014 (US); WONG, Chung Yiu, Cupertino, California, 95014 (US); HABERER, Jean B., Cupertino, California, 95014 (US); HORTON, Timothy P., Cupertino, California, 95014 (US)
(74) Representative: Carpmaels & Ransford LLP

(57) **Abstract**

Some examples of the disclosure are directed to systems and methods for displaying virtual environments associated with developers of webpages. Some examples of the disclosure are directed to displaying a selectable option for displaying the virtual environment based on information from developers of webpages. Some examples of the disclosure are directed to displaying a virtual environment with a level of immersion that is greater than a threshold level of immersion.

## Description

### Cross Reference to Related Applications

This application claims the benefit of U.S. Provisional Application No. 63/794,221, filed April 24, 2025, and U.S. Patent Application No. 19/639,995, filed April 6, 2026, the contents of which are herein incorporated by reference in their entireties for all purposes.

### Field of the Disclosure

This relates generally to systems and methods of presenting virtual environments.

### Background of the Disclosure

Some computer graphical environments provide two-dimensional (2D) and/or three-dimensional (3D) environments where at least some objects presented to a user are virtual and generated by a computer.

### Summary of the Disclosure

Some examples of the disclosure are directed to systems and methods for displaying virtual environments associated with virtual content items (e.g., such as webpages, video content, and/or other types of content items). Some examples of the disclosure are directed to displaying a selectable option for displaying the virtual environment based on information associated with the virtual content. Some examples of the disclosure are directed to displaying a virtual environment with a level of immersion that is greater than a threshold level of immersion. Some examples of the disclosure are directed to displaying virtual content, ceasing display of virtual content, animating virtual content, visually emphasizing virtual content, and/or initiating display of a replacement virtual environment. Some examples of the disclosure are directed to displaying a virtual environment based on changing a currently displayed webpage or other types of virtual content. Some examples of the disclosure are directed to displaying virtual lighting. Some examples of the disclosure are directed to displaying virtual objects in accordance with a mode such as a reading mode. Some examples of the disclosure are directed to displaying a virtual environment based on a mapping between a shape and one or more images provided by developers of webpages.

Some examples of disclosure are directed to displaying a visual indication in accordance with a determination virtual content such as a webpage is associated with an immersive virtual environment. Some examples of the disclosure are directed to detecting selection of the visual indication, and in response, initiating operations to display the virtual environment with a level of immersion greater than a threshold level of immersion.

The full descriptions of these examples are provided in the Drawings and the Detailed Description, and it is understood that this Summary does not limit the scope of the disclosure in any way.

### Brief Description of the Drawings

For improved understanding of the various examples described herein, reference should be made to the Detailed Description below along with the following drawings. Like reference numerals often refer to corresponding parts throughout the drawings.
FIG. 1 illustrates an electronic device presenting a three-dimensional environment according to some examples of the disclosure.
FIGs. 2A-2B illustrate block diagrams of example architectures for electronic devices according to some examples of the disclosure.
FIG. 3 illustrates an electronic device presenting a three-dimensional environment including a virtual object according to some examples of the disclosure.
FIG. 4 illustrates an electronic device displaying of a menu associated with virtual environments according to some examples of the disclosure.
FIG. 5 illustrates an electronic device displaying a virtual environment according to some examples of the disclosure.
FIG. 6 illustrates an electronic device displaying content, modifying content, and ceasing display of content based on interaction with a user interface for a webpage according to some examples of the disclosure.
FIG. 7 illustrates an electronic device displaying a new web browsing tab according to some examples of the disclosure.
FIG. 8 illustrates an electronic device maintaining display of a virtual environment according to some examples of the disclosure.
FIG. 9 illustrates an electronic device displaying a new web browsing tab according to some examples of the disclosure.
FIGs. 10A-10B illustrate an electronic device ceasing display of a virtual environment according to some examples of the disclosure.
FIG. 11 illustrates an electronic device displaying a virtual environment that is different from a previously displayed virtual environment according to some examples of the disclosure.
FIG. 12 illustrates an electronic device displaying a virtual environment that is different from a previously displayed virtual environment according to some examples of the disclosure.
FIG. 13 illustrates a flow diagram of an example process for displaying a developer-provided virtual environment with a level of immersion that is greater than a threshold level of immersion in a three-dimensional environment according to some examples of the disclosure.

### Detailed Description

Some examples of the disclosure are directed to systems and methods for displaying virtual environments associated with developers of webpages. Some examples of the disclosure are directed to displaying a selectable option for displaying the virtual environment based on information from developers of webpages. Some examples of the disclosure are directed to displaying a virtual environment with a level of immersion that is greater than a threshold level of immersion. Some examples of the disclosure are directed to displaying virtual content, ceasing display of virtual content, animating virtual content, visually emphasizing virtual content, and initiating display of a replacement virtual environment. Some examples of the disclosure are directed to displaying a virtual environment based on changing a currently displayed webpage. Some examples of the disclosure are directed to displaying virtual lighting. Some examples of the disclosure are directed to displaying virtual objects in accordance with a mode such as a reading mode. Some examples of the disclosure are directed to displaying a virtual environment based on a mapping between a shape and one or more images provided by developers of webpages.

Some examples of disclosure are directed to displaying a visual indication in accordance with a determination virtual content such as a webpage is associated with an immersive virtual environment. Some examples of the disclosure are directed to detecting selection of the visual indication, and in response, initiating operations to display the virtual environment with a level of immersion greater than a threshold level of immersion.

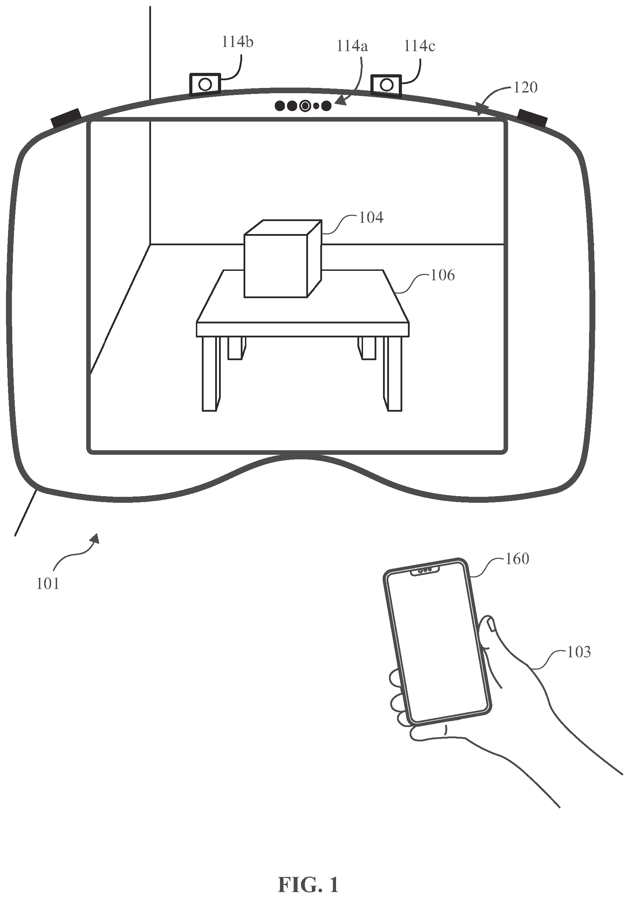

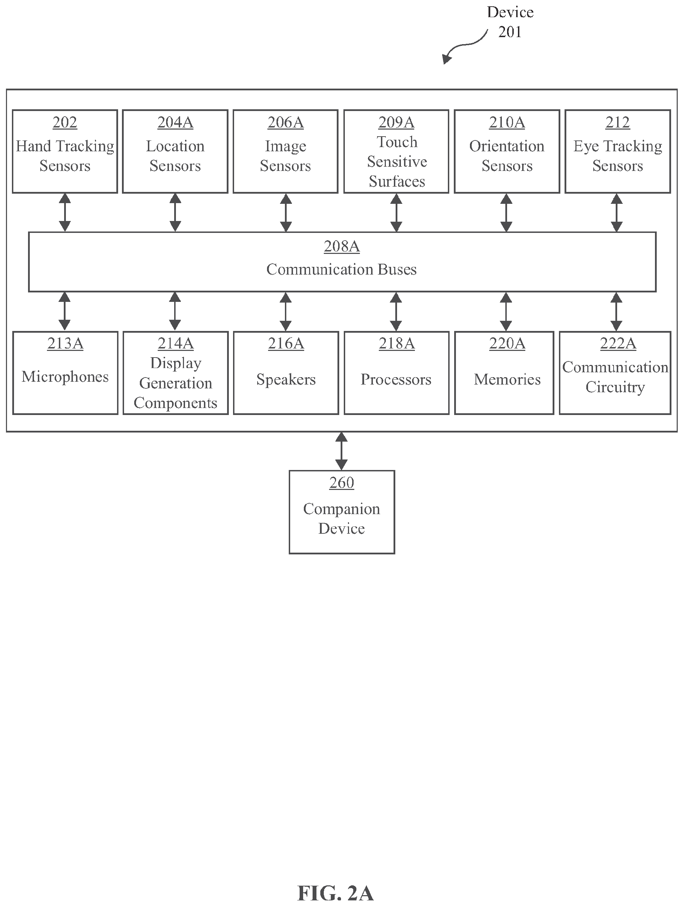

FIG. 1 illustrates an electronic device 101 presenting three-dimensional environment (e.g., an extended reality (XR) environment or a computer-generated reality (CGR) environment, optionally including representations of physical and/or virtual objects), according to some examples of the disclosure. In some examples, as shown in FIG. 1, electronic device 101 is a head-mounted display or other head-mountable device configured to be worn on a head of a user of the electronic device 101. Examples of electronic device 101 are described below with reference to the architecture block diagram of FIG. 2A. As shown in FIG. 1, electronic device 101 and table 106 are located in a physical environment. The physical environment may include physical features such as a physical surface (e.g., floor, walls) or a physical object (e.g., table, lamp, etc.). In some examples, electronic device 101 may be configured to detect and/or capture images of the physical environment including table 106 (illustrated in the field of view of electronic device 101).

In some examples, as shown in FIG. 1, electronic device 101 includes one or more internal image sensors 114a oriented towards a face of the user (e.g., eye tracking cameras as described below with reference to FIGs. 2A-2B). In some examples, internal image sensors 114a are used for eye tracking (e.g., detecting a gaze of the user). Internal image sensors 114a are optionally arranged on the left and right portions of display 120 to enable eye tracking of the user's left and right eyes. In some examples, electronic device 101 also includes external image sensors 114b and 114c facing outwards from the user to detect and/or capture the physical environment of the electronic device 101 and/or movements of the user's hands or other body parts.

In some examples, display 120 has a field of view visible to the user. In some examples, the field of view visible to the user is the same as a field of view of external image sensors 114b and 114c. For example, when display 120 is optionally part of a head-mounted device, the field of view of display 120 is optionally the same as or similar to the field of view of the user's eyes. In some examples, the field of view visible to the user is different from a field of view of external image sensors 114b and 114c (e.g., narrower than the field of view of external image sensors 114b and 114c). In other examples, the field of view of display 120 may be smaller than the field of view of the user's eyes. A viewpoint of a user may determine what content is visible in the field of view, a viewpoint generally specifies a location and a direction relative to the three-dimensional environment. As the viewpoint of a user change, the field of view of the three-dimensional environment may also change accordingly. In some examples, electronic device 101 may be an optical see-through device in which display 120 is a transparent or translucent display through which portions of the physical environment may be directly viewed. In some examples, display 120 may be included within a transparent lens and may overlap all or a portion of the transparent lens. In other examples, electronic device may be a video-passthrough device in which display 120 is an opaque display configured to display images of the physical environment using images captured by external image sensors 114b and 114c. While a single display is shown in FIG. 1, it is understood that display 120 optionally includes more than one display. For example, display 120 optionally includes a stereo pair of displays (e.g., left and right display panels for the left and right eyes of the user, respectively) having displayed outputs that are merged (e.g., by the user's brain) to create the view of the content shown in FIG. 1. In some examples, as discussed in more detail below with reference to FIGs. 2A-2B, the display 120 includes or corresponds to a transparent or translucent surface (e.g., a lens) that is not equipped with display capability (e.g., and is therefore unable to generate and display the virtual object 104) and alternatively presents a direct view of the physical environment in the user's field of view (e.g., the field of view of the user's eyes).

In some examples, the electronic device 101 is configured to display (e.g., in response to a trigger) a virtual object 104 in the three-dimensional environment. Virtual object 104 is represented by a cube illustrated in FIG. 1, which is not present in the physical environment, but is displayed in the three-dimensional environment positioned on the top of table 106 (e.g., real-world table or a representation thereof). Optionally, virtual object 104 is displayed on the surface of the table 106 in the three-dimensional environment displayed via the display 120 of the electronic device 101 in response to detecting the planar surface of table 106 in the physical environment 100.

It is understood that virtual object 104 is a representative virtual object and one or more different virtual objects (e.g., of various dimensionality such as two-dimensional or other three-dimensional virtual objects) can be included and rendered in a three-dimensional environment. For example, the virtual object can represent an application or a user interface displayed in the three-dimensional environment. In some examples, the virtual object can represent content corresponding to the application and/or displayed via the user interface in the three-dimensional environment. In some examples, the virtual object 104 is optionally configured to be interactive and responsive to user input (e.g., air gestures, such as air pinch gestures, air tap gestures, and/or air touch gestures), such that a user may virtually touch, tap, move, rotate, or otherwise interact with, the virtual object 104.

As discussed herein, one or more air pinch gestures performed by a user (e.g., with hand 103 in FIG. 1) are detected by one or more input devices of electronic device 101 and interpreted as one or more user inputs directed to content displayed by electronic device 101. Additionally or alternatively, in some examples, the one or more user inputs interpreted by the electronic device 101 as being directed to content displayed by electronic device 101 (e.g., the virtual object 104) are detected via one or more hardware input devices (e.g., controllers, touch pads, proximity sensors, buttons, sliders, knobs, etc.) rather than via the one or more input devices that are configured to detect air gestures, such as the one or more air pinch gestures, performed by the user. Such depiction is intended to be exemplary rather than limiting; the user optionally provides user inputs using different air gestures and/or using other forms of input.

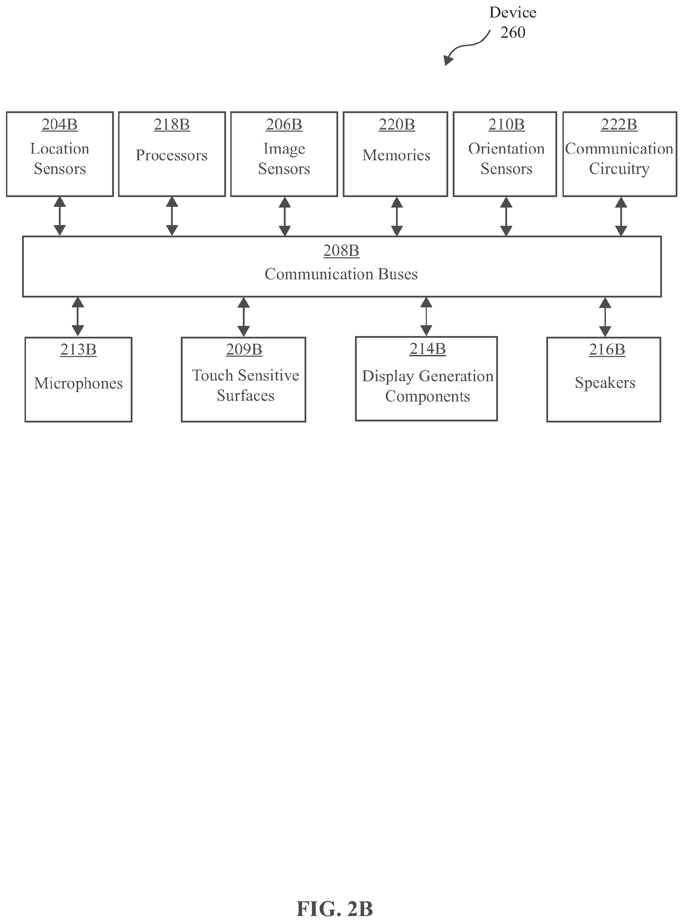

In some examples, the electronic device 101 may be configured to communicate with a second electronic device, such as a companion device. For example, as illustrated in FIG. 1, the electronic device 101 is optionally in communication with electronic device 160. In some examples, electronic device 160 corresponds to a mobile electronic device, such as a smartphone, a tablet computer, a smart watch, a laptop computer, or other electronic device. In some examples, electronic device 160 corresponds to a non-mobile electronic device, which is generally stationary and not easily moved within the physical environment (e.g., desktop computer, server, etc.). Additional examples of electronic device 160 are described below with reference to the architecture block diagram of FIG. 2B. In some examples, the electronic device 101 and the electronic device 160 are associated with a same user. For example, in FIG. 1, the electronic device 101 may be positioned on (e.g., mounted to) a head of a user and the electronic device 160 may be positioned near electronic device 101, such as in a hand 103 of the user (e.g., the hand 103 is holding the electronic device 160), a pocket or bag of the user, or a surface near the user. The electronic device 101 and the electronic device 160 are optionally associated with a same user account of the user (e.g., the user is logged into the user account on the electronic device 101 and the electronic device 160). Additional details regarding the communication between the electronic device 101 and the electronic device 160 are provided below with reference to FIGs. 2A-2B.

In some examples, displaying an object in a three-dimensional environment is caused by or enables interaction with one or more user interface objects in the three-dimensional environment. For example, initiation of display of the object in the three-dimensional environment can include interaction with one or more virtual options/affordances displayed in the three-dimensional environment. In some examples, a user's gaze may be tracked by the electronic device as an input for identifying one or more virtual options/affordances targeted for selection when initiating display of an object in the three-dimensional environment. For example, gaze can be used to identify one or more virtual options/affordances targeted for selection using another selection input. In some examples, a virtual option/affordance may be selected using hand-tracking input detected via an input device in communication with the electronic device. In some examples, objects displayed in the three-dimensional environment may be moved and/or reoriented in the three-dimensional environment in accordance with movement input detected via the input device.

In the descriptions that follows, an electronic device that is in communication with one or more displays and one or more input devices is described, such as a headset that includes the one or more displays and the one or more input devices. It is understood that the electronic device optionally is in communication with one or more other physical user-interface devices, such as a touch-sensitive surface, a physical keyboard, a mouse, a joystick, a hand tracking device, an eye tracking device, a stylus, etc. Further, as described above, it is understood that the described electronic device, display and touch-sensitive surface are optionally distributed between two or more devices. Therefore, as used in this disclosure, information displayed on the electronic device or by the electronic device is optionally used to describe information outputted by the electronic device for display on a separate display device (touch-sensitive or not). Similarly, as used in this disclosure, input received on the electronic device (e.g., touch input received on a touch-sensitive surface of the electronic device, or touch input received on the surface of a stylus) is optionally used to describe input received on a separate input device, from which the electronic device receives input information.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a television channel browsing application, and/or a digital video player application.

FIGs. 2A-2B illustrate block diagrams of example architectures for electronic devices according to some examples of the disclosure. In some examples, electronic device 201 and/or electronic device 260 include one or more electronic devices. For example, the electronic device 201 may be a portable device, an auxiliary device in communication with another device, a head-mounted display, a head-worn speaker, etc., respectively. In some examples, electronic device 201 corresponds to electronic device 101 described above with reference to FIG. 1. In some examples, electronic device 260 corresponds to electronic device 160 described above with reference to FIG. 1.

As illustrated in FIG. 2A, the electronic device 201 optionally includes one or more sensors, such as one or more hand tracking sensors 202, one or more location sensors 204A, one or more image sensors 206A (optionally corresponding to internal image sensors 114a and/or external image sensors 114b and 114c in FIG. 1), one or more touch-sensitive surfaces 209A, one or more motion and/or orientation sensors 210A, one or more eye tracking sensors 212, one or more microphones 213A or other audio sensors, one or more body tracking sensors (e.g., torso and/or head tracking sensors), etc. The electronic device 201 optionally includes one or more output devices, such as one or more display generation components 214A, optionally corresponding to display 120 in FIG. 1, one or more speakers 216A, one or more haptic output devices (not shown), etc. The electronic device 201 optionally includes one or more processors 218A, one or more memories 220A, and/or communication circuitry 222A. One or more communication buses 208A are optionally used for communication between the above-mentioned components of electronic device 201.

Additionally, the electronic device 260 optionally includes the same or similar components as the electronic device 201. For example, as shown in FIG. 2B, the electronic device 260 optionally includes one or more location sensors 204B, one or more image sensors 206B, one or more touch-sensitive surfaces 209B, one or more orientation sensors 210B, one or more microphones 213B, one or more display generation components 214B, one or more speakers 216B, one or more processors 218B, one or more memories 220B, and/or communication circuitry 222B. One or more communication buses 208B are optionally used for communication between the above-mentioned components of electronic device 260.

The electronic devices 201 and 260 are optionally configured to communicate via a wired or wireless connection (e.g., via communication circuitry 222A, 222B) between the two electronic devices. For example, as indicated in FIG. 2A, the electronic device 260 may function as a companion device to the electronic device 201. For example, in some examples, the electronic device 260 processes sensor inputs from electronic devices 201 and 260 and/or generates content for display using display generation components 214A of electronic device 201.

Communication circuitry 222A, 222B optionally includes circuitry for communicating with electronic devices, networks, such as the Internet, intranets, a wired network and/or a wireless network, cellular networks, and wireless local area networks (LANs). Communication circuitry 222A, 222B optionally includes circuitry for communicating using near-field communication (NFC) and/or short-range communication, such as Bluetooth^{®}, etc. In some examples, communication circuitry 222A, 222B includes or supports Wi-Fi (e.g., an 802.11 protocol), Ethernet, ultra-wideband ("UWB"), high frequency systems (e.g., 900 MHz, 2.4 GHz, and 5.6 GHz communication systems), or any other communications protocol, or any combination thereof.

One or more processors 218A, 218B include one or more general processors, one or more graphics processors, and/or one or more digital signal processors. In some examples, one or more processors 218A, 218B include one or more microprocessors, one or more central processing units, one or more application-specific integrated circuits, one or more field-programmable gate arrays, one or more programmable logic devices, or a combination of such devices. In some examples, memories 220A and/or 220B are a non-transitory computer-readable storage medium (e.g., flash memory, random access memory, or other volatile or nonvolatile memory or storage) that stores computer-readable instructions configured to be executed by the one or more processors 218A, 218B to perform the techniques, processes, and/or methods described herein. In some examples, memories 220A and/or 220B can include more than one non-transitory computer-readable storage medium. A non-transitory computer-readable storage medium can be any medium (e.g., excluding a signal) that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on compact disc (CD), digital versatile disc (DVD), or Blu-ray technologies, as well as persistent solid-state memory such as flash, solid-state drives, and the like.

In some examples, one or more display generation components 214A, 214B include a single display (e.g., a liquid-crystal display (LCD), organic light-emitting diode (OLED), or other types of display). In some examples, the one or more display generation components 214A, 214B include multiple displays. In some examples, the one or more display generation components 214A, 214B can include a display with touch capability (e.g., a touch screen), a projector, a holographic projector, a retinal projector, a transparent or translucent display, etc. In some examples, the electronic device does not include one or more display generation components 214A or 214B. For example, instead of the one or more display generation components 214A or 214B, some electronic devices include transparent or translucent lenses or other surfaces that are not configured to display or present virtual content. However, it should be understood that, in such instances, the electronic device 201 and/or the electronic device 260 are optionally equipped with one or more of the other components illustrated in FIGs. 2A and 2B and described herein, such as the one or more hand tracking sensors 202, one or more eye tracking sensors 212, one or more image sensors 206A, and/or the one or more motion and/or orientations sensors 210A. Alternatively, in some examples, the one or more display generation components 214A or 214B are provided separately from the electronic devices 201 and/or 260. For example, the one or more display generation components 214A, 214B are in communication with the electronic device 201 (and/or electronic device 260), but are not integrated with the electronic device 201 and/or electronic device 260 (e.g., within a housing of the electronic devices 201, 260). In some examples, electronic devices 201 and 260 include one or more touch-sensitive surfaces 209A and 209B, respectively, for receiving user inputs, such as tap inputs and swipe inputs or other gestures (e.g., hand-based or finger-based gestures). In some examples, the one or more display generation components 214A, 214B and the one or more touch-sensitive surfaces 209A, 209B form one or more touch-sensitive displays (e.g., a touch screen integrated with each of electronic devices 201 and 260 or external to each of electronic devices 201 and 260 that is in communication with each of electronic devices 201 and 260).

Electronic devices 201 and 260 optionally include one or more image sensors 206A and 206B, respectively. The one or more image sensors 206A, 206B optionally include one or more visible light image sensors, such as charged coupled device (CCD) sensors, and/or complementary metal-oxide-semiconductor (CMOS) sensors operable to obtain images of physical objects from the real-world environment. The one or more image sensors 206A, 206B also optionally include one or more infrared (IR) sensors, such as a passive or an active IR sensor, for detecting infrared light from the real-world environment. For example, an active IR sensor includes an IR emitter for emitting infrared light into the real-world environment. The one or more image sensors 206A, 206B also optionally include one or more cameras configured to capture movement of physical objects in the real-world environment. The one or more image sensors 206A, 206B also optionally include one or more depth sensors configured to detect the distance of physical objects from electronic device 201, 260. In some examples, information from one or more depth sensors can allow the device to identify and differentiate objects in the real-world environment from other objects in the real-world environment. In some examples, one or more depth sensors can allow the device to determine the texture and/or topography of objects in the real-world environment. In some examples, the one or more image sensors 206A or 206B are included in an electronic device different from the electronic devices 201 and/or 260. For example, the one or more image sensors 206A, 206B are in communication with the electronic device 201, 260, but are not integrated with the electronic device 201, 260 (e.g., within a housing of the electronic device 201, 260). Particularly, in some examples, the one or more cameras of the one or more image sensors 206A, 206B are integrated with and/or coupled to one or more separate devices from the electronic devices 201 and/or 260 (e.g., but are in communication with the electronic devices 201 and/or 260), such as one or more input and/or output devices (e.g., one or more speakers and/or one or more microphones, such as earphones or headphones) that include the one or more image sensors 206A, 206B. In some examples, electronic device 201 or electronic device 260 corresponds to a head-worn speaker (e.g., headphones or earbuds). In such instances, the electronic device 201 or the electronic device 260 is equipped with a subset of the other components illustrated in FIGs. 2A and 2B and described herein. In some such examples, the electronic device 201 or the electronic device 260 is equipped with one or more image sensors 206A, 206B, the one or more motion and/or orientations sensors 210A, 210B, and/or speakers 216A, 216B.

In some examples, electronic device 201, 260 uses CCD sensors, event cameras, and depth sensors in combination to detect the physical environment around electronic device 201, 260. In some examples, the one or more image sensors 206A, 206B include a first image sensor and a second image sensor. The first image sensor and the second image sensor work in tandem and are optionally configured to capture different information of physical objects in the real-world environment. In some examples, the first image sensor is a visible light image sensor, and the second image sensor is a depth sensor. In some examples, electronic device 201, 260 uses the one or more image sensors 206A, 206B to detect the position and orientation of electronic device 201, 260 and/or the one or more display generation components 214A, 214B in the real-world environment. For example, electronic device 201, 260 uses the one or more image sensors 206A, 206B to track the position and orientation of the one or more display generation components 214A, 214B relative to one or more fixed objects in the real-world environment.

In some examples, electronic devices 201 and 260 include one or more microphones 213A and 213B, respectively, or other audio sensors. Electronic device 201, 260 optionally uses the one or more microphones 213A, 213B to detect sound from the user and/or the real-world environment of the user. In some examples, the one or more microphones 213A, 213B include an array of microphones (e.g., a plurality of microphones) that optionally operate in tandem, such as to identify ambient noise or to locate the source of sound in space of the real-world environment.

Electronic devices 201 and 260 include one or more location sensors 204A and 204B, respectively, for detecting a location of electronic device 201 and/or the one or more display generation components 214A and a location of electronic device 260 and/or the one or more display generation components 214B, respectively. For example, the one or more location sensors 204A, 204B can include a global positioning system (GPS) receiver that receives data from one or more satellites and allows electronic device 201, 260 to determine the absolute position of the electronic device in the physical world.

Electronic devices 201 and 260 include one or more orientation sensors 210A and 210B, respectively, for detecting orientation and/or movement of electronic device 201 and/or the one or more display generation components 214A and orientation and/or movement of electronic device 260 and/or the one or more display generation components 214B, respectively. For example, electronic device 201, 260 uses the one or more orientation sensors 210A, 210B to track changes in the position and/or orientation of electronic device 201, 260 and/or the one or more display generation components 214A, 214B, such as with respect to physical objects in the real-world environment. The one or more orientation sensors 210A, 210B optionally include one or more gyroscopes and/or one or more accelerometers.

Electronic device 201 includes one or more hand tracking sensors 202 and/or one or more eye tracking sensors 212, in some examples. It is understood, that although referred to as hand tracking or eye tracking sensors, that electronic device 201 additionally or alternatively optionally includes one or more other body tracking sensors, such as one or more leg, one or more torso and/or one or more head tracking sensors. The one or more hand tracking sensors 202 are configured to track the position and/or location of one or more portions of the user's hands, and/or motions of one or more portions of the user's hands with respect to the three-dimensional environment, relative to the one or more display generation components 214A, and/or relative to another defined coordinate system. The one or more eye tracking sensors 212 are configured to track the position and movement of a user's gaze (e.g., a user's attention, including eyes, face, or head, more generally) with respect to the real-world or three-dimensional environment and/or relative to the one or more display generation components 214A. In some examples, the one or more hand tracking sensors 202 and/or the one or more eye tracking sensors 212 are implemented together with the one or more display generation components 214A. In some examples, the one or more hand tracking sensors 202 and/or the one or more eye tracking sensors 212 are implemented separate from the one or more display generation components 214A. In some examples, electronic device 201 alternatively does not include the one or more hand tracking sensors 202 and/or the one or more eye tracking sensors 212. In some such examples, the one or more display generation components 214A may be utilized by the electronic device 260 to provide a three-dimensional environment and the electronic device 260 may utilize input and other data gathered via the other one or more sensors (e.g., the one or more location sensors 204A, the one or more image sensors 206A, the one or more touch-sensitive surfaces 209A, the one or more motion and/or orientation sensors 210A, and/or the one or more microphones 213A or other audio sensors) of the electronic device 201 as input and data that is processed by the one or more processors 218B of the electronic device 260. Additionally or alternatively, electronic device 260 optionally does not include other components shown in FIG. 2B, such as the one or more location sensors 204B, the one or more image sensors 206B, the one or more touch-sensitive surfaces 209B, etc. In some such examples, the one or more display generation components 214A may be utilized by the electronic device 260 to provide a three-dimensional environment and the electronic device 260 may utilize input and other data gathered via the one or more motion and/or orientation sensors 210A (and/or the one or more microphones 213A) of the electronic device 201 as input.

In some examples, the one or more hand tracking sensors 202 (and/or other body tracking sensors, such as leg, torso and/or head tracking sensors) can use the one or more image sensors 206 (e.g., one or more IR cameras, 3D cameras, depth cameras, etc.) that capture three-dimensional information from the real-world including one or more body parts (e.g., hands, legs, or torso of a human user). In some examples, the hands can be resolved with sufficient resolution to distinguish fingers and their respective positions. In some examples, the one or more image sensors 206A are positioned relative to the user to define a field of view of the one or more image sensors 206A and an interaction space in which finger/hand position, orientation and/or movement captured by the image sensors are used as inputs (e.g., to distinguish from a user's resting hand or other hands of other persons in the real-world environment). Tracking the fingers/hands for input (e.g., gestures, touch, tap, etc.) can be advantageous in that it does not require the user to touch, hold or wear any sort of beacon, sensor, or other marker.

In some examples, the one or more eye tracking sensors 212 include at least one eye tracking camera (e.g., IR cameras) and/or illumination sources (e.g., IR light sources, such as LEDs) that emit light towards a user's eyes. The eye tracking cameras may be pointed towards a user's eyes to receive reflected IR light from the light sources directly or indirectly from the eyes. In some examples, both eyes are tracked separately by respective eye tracking cameras and illumination sources, and a focus/gaze can be determined from tracking both eyes. In some examples, one eye (e.g., a dominant eye) is tracked by one or more respective eye tracking cameras/illumination sources.

Electronic devices 201 and 260 are not limited to the components and configuration of FIGs. 2A-2B, but can include fewer, other, or additional components in multiple configurations. In some examples, electronic device 201 and/or electronic device 260 can each be implemented between multiple electronic devices (e.g., as a system). In some such examples, each of (or more of) the electronic devices may include one or more of the same components discussed above, such as various sensors, one or more display generation components, one or more speakers, one or more processors, one or more memories, and/or communication circuitry. A person or persons using electronic device 201 and/or electronic device 260, is optionally referred to herein as a user or users of the device.

Attention is now directed towards interactions with one or more virtual objects that are displayed in a three-dimensional environment presented at an electronic device (e.g., corresponding to electronic device 201). Some examples of the disclosure are directed to presenting virtual content based on specifications and/or information received from a developer of a web content using an electronic device. The ability of the electronic device to detect the availability of such information, display options for selecting a button or icon that corresponds to the information, and/or presenting the information automatically in response to selecting the input allows the computer system to selectively present virtual content for web content that is displayed in virtual objects, thus reducing reliance upon downloading of separate applications to receive and/or download such content in an extended-reality environment and freeing storage for other content in the storage. Further, by changing and/or updating the virtual content displayed in a three-dimensional environment based upon interaction with a webpage for the virtual content, the electronic device reduces the amount of inputs - and therefore processing for the inputs - used to affect the changing and/or updating of the virtual content.

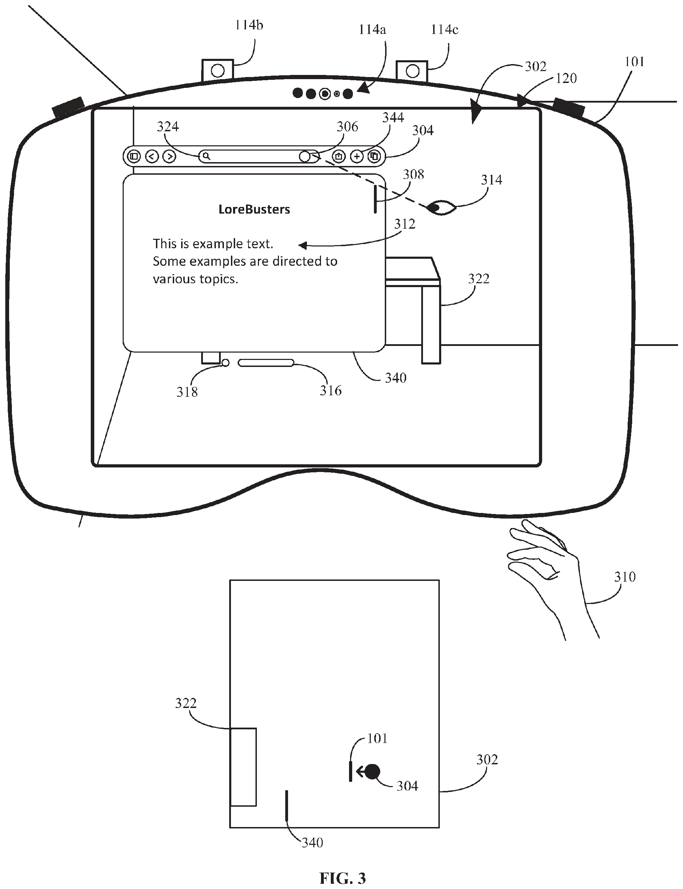

FIG. 3 illustrates an electronic device presenting a three-dimensional environment including a virtual object according to some examples of the disclosure. In some examples, electronic device 101 presents three-dimensional environment 302 via one or more displays including display 120. In some examples, electronic device 101 includes or is in communication with one or more input devices, such as internal image sensor, external image sensor 114b, and/or external image sensor 114c. In some examples, external image sensor 114b and 114c correspond to one or more outward facing devices such as image sensors, cameras, infrared sensors, light detection and ranging (LiDAR) sensors, and/or some combination thereof. In some examples, internal image sensor 114a corresponds to one or more user-facing sensors, such as one or more of the sensors described with reference to external image sensor 114b-114c.

In FIGs. 3-13, three-dimensional environment 302 includes physical and virtual objects. For example, three-dimensional environment 302 includes a table 322. Table 322 is optionally visible via a partially or entirely transparent sheet of material such as a lens. Thus, electronic device 101 facilitates presentation by allowing visibility via the transparent material. In some examples, table 322 is visible by digital reproduction, such as when electronic device 101 captures images via one or more cameras corresponding to image sensors 114b-c and displays such images via display 120.

In FIGs. 3-13, three-dimensional environment 302 includes virtual objects. For example, virtual object 340 is displayed via display 120 in FIG. 3. In some examples, virtual object 340 is associated with an application. For example, in FIG. 3, virtual object 340 corresponds to a web browsing application and may include a user interface for interacting with the web browsing application.

In FIGs. 3-13, three-dimensional environment 302 is illustrated with two perspectives. For example, in FIGs. 3-13 illustrate the view of three-dimensional environment 302 presented via electronic device 101. Additionally, FIGs. 3-13 illustrate an overhead view of three-dimensional environment 302, which illustrates the position of the viewpoint of electronic device 101, the position of virtual content, and/or the position of physical objects.

In some examples, the virtual object 340 includes and/or is displayed concurrently with virtual controls. For example, controls 304 in FIG. 3 include one or more selectable options, which respectively correspond to one or more operations associated with the web browsing application. For example, controls 304 may include a selectable option that is selectable to display a sidebar which may include browsing history, bookmarks, groups of browsing tabs, and/or additional or alternative representations of information and/or operations related to the web browsing application. Additionally or alternatively, controls 304 may include a selectable option to navigate between different web pages. For example, controls 304 may include a selectable option for navigating backwards through a web browsing history and/or may include a selectable option for navigating forward through the web browsing history. In some examples, controls 304 include a selectable option to initiate sharing of a currently displayed web page via a text message, through near-field communication protocols, via e-mail, and/or via additional or alternative representations sharing operations using additional or alternative protocols. Controls 304 may include a selectable option 344 for adding a new tab that is managed by the web browsing application and/or may allow the user to display a collection of currently managed browsing webpage tabs. Controls 304 may include an address bar 324, which may include text indicating a currently displayed webpage such as a Uniform Resource Locator (URL) (e.g., a currently displayed webpage in a web browsing user interface included in the virtual object 340). In some examples, a control such as selectable option 306 is included in and/or overlays address bar 324.

In some examples, electronic device 101 may detect a selection input directed to the selectable options and/or the virtual elements. In response to detecting the selection input, electronic device 101 may perform one or more operations associated with the selected selectable option and/or selected virtual element. Some examples described herein relate to a selectable option that is selectable to perform the one or more operations. It is understood that selectable may refer to examples in which electronic device 101 may detect input, and in response, may perform the one or more corresponding operations.

In one or more examples, controls 304 may include one or more controls for managing the position and/or display of virtual object 340. For example, as illustrated in the example of FIG. 3, electronic device 101 displays a grabber 316. In some examples, grabber 316 is selectable to initiate movement of virtual object 340 in three-dimensional environment 302. For example, electronic device 101 may detect attention 314 (e.g., based on the gaze of the user) directed to grabber 316 while hand 310 forms an air gesture, such as a pinching between two fingers included in hand 310 (e.g., an air pinch). In some examples, controls 304 includes a selectable option 318. Selectable option 318 may be selectable to cease display of virtual object 340 and may additionally or alternatively display other controls associated with virtual object 340 in accordance with a determination that a selection input directed to selectable option 318 is maintained for a period of time greater than a threshold period of time.

In some examples, in response to detecting the attention 314 of the user directed to grabber 316 and concurrently detecting an air gesture (e.g., an air pinch) performed by hand 310, the electronic device 101 initiates movement of virtual object 340. In some examples, electronic device 101 moves the virtual object 340 in one or more directions and/or by one or more amounts that correspond to one or more directions and/or one or more amounts of movement of hand 310 and/or the air shape while the air shape is maintained. For example, electronic device 101 detects movement of hand 310 in a first direction and optionally moves the virtual object 340 in a second direction that is based on (e.g., similar to, opposite to, or the same as) the first direction. Additionally or alternatively, in response to detecting movement of hand 310 in a third direction, different from the first direction, electronic device 101 may move virtual object 340 in a fourth direction, different from the second direction and/or based on (e.g., similar to, opposite to, or the same as) the third direction. Additionally or alternatively, electronic device 101 may detect a first amount of movement of hand 310, and in response, may move virtual object 340 by a second amount that is based on (e.g., the same as or multiple of) the first amount of movement. In some examples, in response to detecting a third amount of movement of hand 310, different from the first amount, electronic device 101 moves virtual object 340 by a fourth amount, different from the second amount and/or based on (e.g., the same as or a multiple of) the third amount.

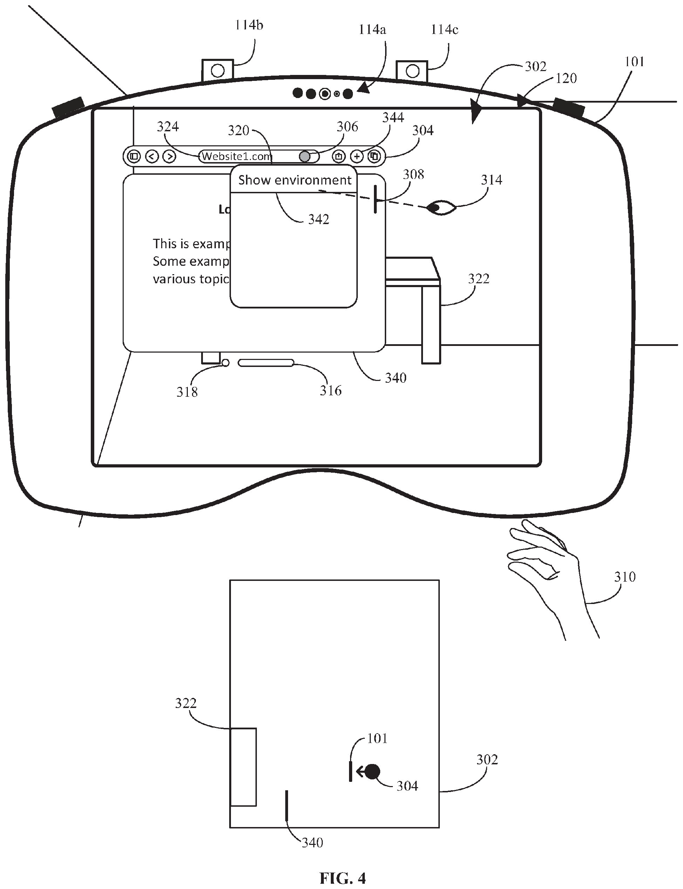

In some examples, controls 304 includes one or more controls to initiate operations related to the manner by which electronic device 101 displays virtual content. For example, selectable option 306, as described further herein, optionally corresponds to a selectable option that is selectable to initiate display of a menu including representations of the aforementioned operations. As described with reference to at least FIGs. 4-13, the electronic device may display a selectable option for displaying a virtual environment and/or images corresponding to a virtual environment that is to be displayed concurrently we the web browser (e.g., virtual content). In some examples, the virtual environment is associated with the webpage displayed in the user interface of virtual object 340. For example, in FIG. 3, virtual object 340 includes text associated with a webpage (e.g., "Webpage1") including a title and/or example content 312, which may include text and/or images associated with the webpage.

In some examples, an entity associated with the webpage provides an indication to electronic device 101 concerning the availability of a virtual environment for display by electronic device 101. For example, a developer of the webpage may embed metadata associated with the webpage, such as a meta tag that points to one or more images, media, virtual objects, universal scene descriptor (USD) files, and/or additional or alternative resources that electronic device 101 may receive and obtain to display electronic device 101. In some examples, the metadata is indicated by the developer, and resources used to display a related virtual environment are stored at a device that is different from electronic device 101. For example, the resources may be stored partially or entirely at one or more servers that may be in direct or indirect communication with electronic device 101. In some examples, the developer may embed metadata concerning the scale of the virtual environment in the HyperText Markup Language (HTML) of the webpage. For example, the developer may embed attributes, tags, fields and/or other web-based information that, when parsed and/or read by electronic device 101, may cause electronic device 101 to display a visual indication to indicate to a user of electronic device 101 that a virtual environment has been provided by the developer. In some examples, the developer may embed metadata concerning compatibility with the extended reality (XR) device. In some examples, the developer may indicate spatial resources and/or additional or alternative information to display the virtual environment, such as linking to one or more devices, one or more links and/or one or more files used to retrieve the resources and/or information.

In some examples, the developer may indicate availability of a three-dimensional model using the metadata. For example, the three-dimensional model may include one or more of a hand-crafted scene including a plurality of polygons, digital scans and/or reproductions of a physical environment, geometric shapes with photographic or generated textures overlaying the geometric shapes, and/or some combination thereof. In some examples, the metadata is similar to, the same as, and/or otherwise corresponds to the "model" HTML element. For example, the developer may indicate a model element or a similar but distinct element in the HTML of the webpage that points to the three-dimensional model and/or environment. In such an example, electronic device 101 may display the three-dimensional model and/or environment indicated by the HTML model element or similar HTML element within a three-dimensional environment of the user, such as overlaying visibility of the physical environment of the user. In some examples, the three-dimensional model includes two-dimensional content, such as images, pre-recorded video, and/or streams of live video. In some examples, some or all of the model may be used to present virtual lighting within a three-dimensional virtual environment displayed by electronic device 101, as described further below.

In the example of FIG. 3, electronic device 101 detects selection of selectable option 306. In some examples, electronic device 101 displays selectable option 306 with the appearance as shown in FIG. 3 (e.g., with a first color, size, brightness, including first media, etc.) in accordance with a determination that the developer embedded information indicating that a virtual environment is available for display at electronic device 101. In some examples, selection includes selection input. In some examples, selection input includes one or more of attention directed to selectable option 306, an air shape and/or air gesture, a voice command, pressing of a physical button included in electronic device 101 and/or included in an input device communication with electronic device 101, contact between an object and a surface (e.g., hand 310 contacting a touchpad or a non-touch-sensitive surface monitored by electronic device 101 and/or an input device in communication with electronic device 101), and/or some combination thereof. In response to detecting the selection input, electronic device 101 may perform one or more operations to change the manner by which virtual content is presented to the user. For example, the operations may include displaying a menu for displaying virtual environments related to the webpage displayed in virtual object 340 as illustrated in FIG. 4.

FIG. 4 illustrates display of a menu associated with virtual environments according to some examples of the disclosure. For example, electronic device 101 may display the menu 320 as shown in FIG. 4 in response to detecting selection input as shown in FIG. 3. As illustrated in FIG. 4, electronic device 101 may display menu 320 which may include selectable option 342. In some examples, menu 320 overlays some or all of virtual object 340.

In some examples, in accordance with a determination that the webpage corresponding to the URL depicted in address bar 324 is associated with a virtual environment, electronic device 101 displays selectable option 342 (e.g., as described with reference to the developer embedding information indicating availability of the virtual environment above). In some examples, in accordance with a determination that the webpage is not associated with a virtual environment, electronic device 101 forgoes display of selectable option 342, or displays selectable option 342 with a visual appearance that differs from a visual appearance of selectable option 342 when the virtual environment is available (e.g., available as shown in FIG. 4).

In FIG. 4, selectable option 342 includes text indicating that selectable option 342 may be selectable to cause display of an environment associated with the webpage. For example, selectable option 342 indicates that a "show environment" option is available to a user of electronic device 101. In some examples, the selectable option 342 is selectable to select an environment from a plurality of different environments. For example, a developer of the webpage optionally indicates to electronic device 101 that a plurality of environments are available for display. In response to receiving such an indication and/or based on reading of metadata received from the developer (e.g., embedded in the webpage), electronic device 101 optionally displays a plurality of representations of the plurality of environments in response to detecting selection of the selectable option 342.

In FIG. 4, selectable option 306 is displayed with an appearance that differs from the appearance depicted in FIG. 3. In particular, electronic device 101 may change the displayed appearance of selectable option 306 to indicate that menu 320 is displayed, such as depicted from FIG. 3 to as depicted in FIG. 4. In some examples, electronic device 101 may change an opacity, size, brightness, saturation, color, and/or content such as images and/or icons included in selectable option 306. In some examples, such change(s) are performed by electronic device 101 in response to detecting selection input directed toward selectable option 306 (e.g., as shown in FIG. 3).

In some examples, electronic device 101 displays additional or alternative selectable options included in menu 320. For example, electronic device 101 may display one or more selectable options for changing a font size of text included in virtual object 340. For example, electronic device 101 may display a first selectable option that is selectable to increase the font size. Additionally or alternatively, electronic device 101 may display a second selectable option that is selectable to decrease the font size. In some examples, electronic device 101 may display an indication of the font size, such as a percentage of a nominal font size (e.g., 20, 50, 80, 100, 120, 150, or 200%).

In some examples, electronic device 101 displays a selectable option that is selectable to display the content included in a webpage in a reader mode. In some examples, electronic device 101 displays content in the reader mode by ceasing display of some content included in the webpage such as advertisements and/or content navigation elements like thumbnails that are less relevant to the focus of the webpage. In some examples, electronic device 101 displays the content in the reader mode with a color, size, scale, justification, line width, and/or some combination thereof that is different from displaying the content without the reader mode. For example, electronic device 101 may display text centered on the page, overlaying a backdrop color that is different from a color of the original webpage. Additionally or alternatively, electronic device 101 may display the text with a fixed line width that is different from the line width that is displayed without configuration of the reader mode. As described further herein, the selectable option corresponding to the reader mode, when selected, may cause electronic device 101 to display a virtual environment and/or a virtual overlay that may supersede a virtual environment that is displayed when the selectable option corresponding to the reader mode is selected. As an example, electronic device 101 may display one or more colors overlaying display and/or visibility of virtual and/or physical objects in three-dimensional environment 302. The colors may be based on colors included in images, media, graphics, and/or other content included in the webpage displayed in virtual object 340. In some examples, the colors are displayed with a level of immersion that is greater than a threshold level of immersion, as described further herein at least with reference to display of virtual environment(s) associated with selectable option 342. In this way, electronic device 101 may cease display of a virtual environment and/or may display the virtual object 340 and/or a replacement virtual environment in accordance with a mode of web content presentation (e.g., a first mode).

In some examples, menu 320 includes additional or alternative selectable options. For example, menu 320 may include a selectable option that is selectable to display a translation of content included in the webpage. Additionally or alternatively, menu 320 may include a selectable option that is selectable to request a different configuration of the web page, such as a configuration suited for handheld mobile devices when electronic device 101 is a different type of device (e.g., a tablet device, a desktop computer, a head-worn device, etc.). In some examples, menu 320 may include a selectable option that is selectable to display settings associated with the webpage. In some examples, menu 320 may include a selectable option that is selectable to display a collection of privacy metrics associated with the webpage.

In some examples, in response to detecting selection input directed to selectable option 306, electronic device 101 performs one or more of the operations described with reference to the menu described above, without displaying the menu.

In the example of FIG. 4, electronic device 101 detects attention 314 directed to selectable option 342 while hand 310 forms an air gesture corresponding to a pinching gesture (e.g., an air pinch). The aforementioned combination of inputs may correspond to a selection input directed to a selectable affordance that is configured to initiate display of a virtual environment associated with the webpage corresponding to the URL in address bar 324.

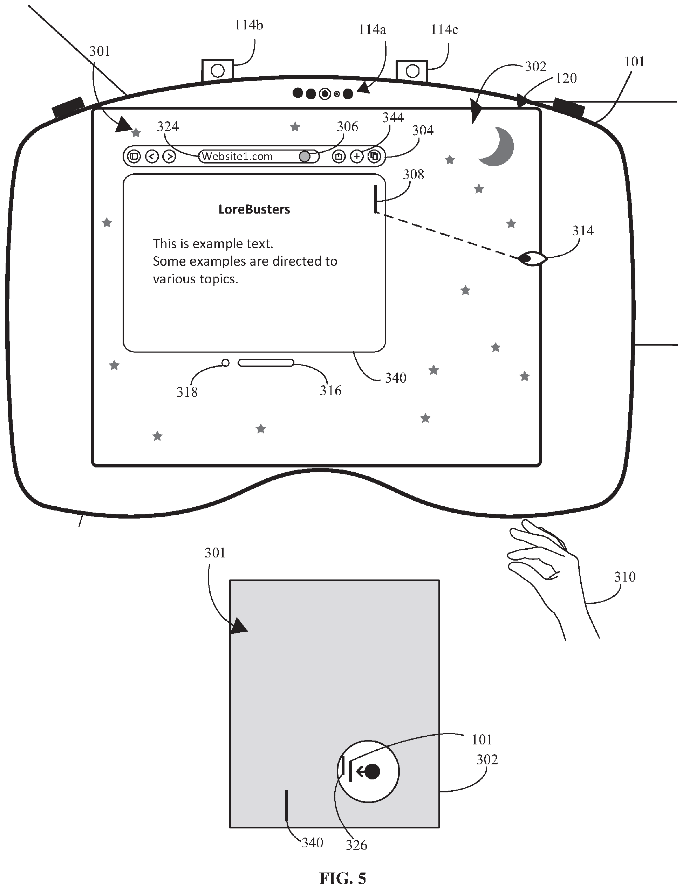

In some examples, in response to detecting selection of selectable option 342, the electronic device 101 displays a virtual environment that is associated with the webpage (e.g., as described above). FIG. 5 illustrates an electronic device displaying a virtual environment according to some examples of the disclosure. In the example of FIG. 5, electronic device 101 displays a virtual environment with a level of immersion greater than a threshold level of immersion, as described further below. For example, electronic device 101 may display the virtual environment 301 as shown in FIG. 5 in response to detecting the selection input as shown in the example of FIG. 4. In some examples, virtual environment 301 is created and made part of the metadata associated with the webpage by a developer of the webpage included in virtual object 340, as described further at least with reference to FIGs. 3-4. In some examples, three-dimensional environment 302 includes virtual environment 301, such as shown in the example of FIG. 5. In the example of FIG. 5, the overhead view of three-dimensional environment 302 illustrates that the virtual environment can surround the user of electronic device 101 such that even if the user changes their viewpoint (e.g., the position and/or orientation of electronic device 101 relative to three-dimensional environment 302), the virtual environment will be displayed to the user by the electronic device 101. In some examples, virtual environment 301 obscures the virtual environment that represents the physical environment of the user (e.g., as described further herein).

In some examples, virtual environment 301 is displayed relative to a viewpoint of electronic device 101 and/or relative to three-dimensional environment 302. For example, electronic device 101 optionally displays virtual environment 301 based on a plurality of coordinate axes established relative to physical portions of three-dimensional environment 302. As an example, a vertical axis of virtual environment 301 optionally is parallel to a vector extending perpendicular to a floor of where electronic device 101 is located. Additionally or alternatively, a depth axis of virtual environment 301 (e.g., perpendicular to the vertical axis and/or to a surface of electronic device 101 such as a front surface of electronic device 101) optionally extends parallel to a vector extending perpendicular to the front surface of electronic device 101 and/or parallel to the floor of electronic device 101. In some examples, the depth axis is non-parallel with respect to the floor and/or is parallel with the vector extending perpendicular to the front surface of electronic device 101 (e.g., tilted or reclined relative to the floor). In this way, in response to detecting input initiating display of virtual environment 301, electronic device 101 displays virtual environment 301 with an orientation that matches the relative position and/or orientation of electronic device 101 in three-dimensional environment 302. In some examples, displaying virtual environment 301 includes clipping some or all of the virtual content 301 that otherwise may overlap and/or conflict with any virtual windows corresponding to an operating system of electronic device 101. For example, in response to detecting the input initiating display of virtual environment 301, electronic device 101 optionally forgoes display of virtual content within a 0.1, 0.25, 0.5, 1, 1.5, or 3m radius of the electronic device 101 and/or optionally maintains visibility of a physical floor of three-dimensional environment 302. Additionally or alternatively, electronic device 101 may forgo display of portions of virtual environment 301 that may overlap with a system user interface (e.g., a keyboard, a settings user interface, a notification).

In some examples, virtual environment 301 includes virtual objects, textures, images, and/or additional or alternative virtual content. FIG. 5, for example, illustrates virtual environment 301 including virtual stars and/or a virtual moon. Additionally or alternatively, virtual environment 301 may include a night sky color. In some examples, the virtual content included in virtual environment 301 is displayed overlaying and/or visually obscuring aspects of the physical environment. For example, electronic device 101 in the example of FIG. 5 forgoes visibility of table 322 that is presented as shown in the example of FIG. 4. Further, electronic device 101 may forgo presentation of dimensions of the physical environment at least temporarily. For example, electronic device 101 in the example of FIG. 5 ceases visibility of the walls and/or ceiling in three-dimensional environment 302 and displays virtual environment 301 overlaying the ceiling and/or walls.

In some examples, displaying virtual environment 301 includes displaying one or more animated effects. For example, the developer of the webpage that indicates virtual environment 301 to electronic device 101 may specify one or more animations of virtual content in virtual environment 301. In response to receiving such an indication, electronic device 101 may animate changes to virtual environment 301 in accordance with a configuration obtained based on the indication from the developer. For example, electronic device 101 may animate movement of virtual content, may cease display of virtual content, may initiate display of virtual content, may display media (e.g., pictures, previously recorded video, live streamed video), may initiate display of virtual lighting as described further herein, and/or may change visual characteristics such as color, saturation, hue, brightness, and/or contrast of virtual content.

In some examples, electronic device 101 maintains display of virtual object 340 in three-dimensional environment 302 when displaying virtual environment 301. For example, electronic device 101 maintains display of virtual object 340 at a position and/or with an orientation that is the same in the example of FIG. 5 as illustrated in the example of FIG. 4 in response to detecting the selection input illustrated in the example of FIG. 4. Thus, electronic device 101 may forgo changing of the position of virtual object 340 in three-dimensional environment 302 in response to detecting selection input initiating display of virtual environment 301. Additionally or alternatively, electronic device 101 may maintain display of selectable option 306 with the visual appearance shown in the example of FIG. 4 to indicate that a virtual environment provided by the developer of the webpage shown in virtual object 340 is being displayed.

In some examples, electronic device 101 additionally or alternatively displays a visual indication that virtual environment 301 is displayed, different from selectable option 306, such as an additional icon displayed adjacent to or overlaying address bar 324. In some examples, electronic device 101 changes the content (e.g., icon, text, color, and/or shape) of selectable option 306 to indicate that virtual environment is being displayed. For example, electronic device 101 may change the shape, color, and/or one or more icons included in selectable option 306 in response to detecting the input shown in the example of FIG. 4.

As shown in the overhead view of three-dimensional environment 302, electronic device 101 may display virtual environment 301 with a level of immersion greater than a threshold level of immersion. For example, some or all of visibility and/or display of physical portions of three-dimensional environment may be replaced with virtual content included in virtual environment 301. In this way, a developer of a webpage or other content associated with virtual object 340 may indicate availability of virtual environment 301 and may facilitate the configuration of virtual environment 301 for display at electronic device 101 to immersive a user of electronic device 101 within virtual environment 301.

In some examples, immersion includes an associated degree to which virtual content displayed in the three-dimensional environment obscures background content (e.g., representations of the user's physical environment, and/or certain virtual content that is displayed prior to displaying the virtual content with the level of immersion greater than the threshold level of immersion, such as a virtual environment). As described further herein, the level of immersion optionally relates to visual properties of the virtual content included in a virtual environment. For example, the level of immersion optionally includes a threshold percentage of a viewport of electronic device 101 that includes and/or is consumed by the virtual environment (e.g., 10, 30, 50, 70, 80, 90, 95, or 100% of the viewport). Additionally or alternatively, the level of immersion optionally defines a radius around electronic device 101 that is not consumed by the virtual content (e.g., portions of three-dimensional environment 302 beyond the radius are consumed by the virtual environment 301, such as a 0, 0.5, 0.1, 0.15, 0.3, 0.5, 1, 1.5, 3, or 5m radius). Additionally or alternatively, the level of immersion optionally includes a level of opacity of the virtual content (e.g., 0, 5, 10, 20, 30, 50, 75, or 100% opacity). In some examples, a combination of a plurality of level of visual properties changes in accordance with a change in level of immersion, such as described below with reference to a first level of immersion and/or a second level of immersion.

In some examples, a level of immersion includes an associated degree to which the content displayed by the electronic device obscures background content (e.g., content other than the virtual content) around/behind the first virtual object, optionally including the number of items of background content displayed and the visual characteristics (e.g., colors, contrast, opacity) with which the background content is displayed, and/or the angular range of the content displayed via the display generation component (e.g., 60 degrees of content displayed at low immersion, 120 degrees of content displayed at medium immersion, 180 degrees of content displayed at high immersion), and/or the proportion of the viewport displayed via the display generation consumed by the content displayed by the electronic device (e.g., 33% of the field of view consumed by content displayed by the electronic device at low immersion, 66% of the field of view consumed by content displayed by the electronic device at medium immersion, 100% of the field of view consumed by content displayed by the electronic device at high immersion).

In some examples, at a first (e.g., low) level of immersion, the background, virtual and/or real objects are displayed in an unobscured manner. For example, a user interface displayed with a low level of immersion may be displayed concurrently with the background content, which is optionally displayed with full brightness, color, and/or translucency. In some examples, in a respective user interface displayed with no (or very low) immersion, no (or very few) virtual user interface element is displayed, and only (or mostly only) the background content may be displayed via the display generation component. In some examples, at a second (e.g., higher) level of immersion, the background, virtual and/or real objects are displayed in an obscured manner (e.g., dimmed, blurred, removed from display, etc.). For example, a respective user interface with a high level of immersion may be displayed without concurrently displaying the background content (e.g., in a full screen or fully immersive mode). As another example, a user interface displayed with a medium level of immersion may be displayed concurrently with darkened, blurred, or otherwise de-emphasized background content. In some examples, the visual characteristics of the background objects vary among the background objects. For example, at a particular immersion level, one or more first background objects may be visually de-emphasized (e.g., dimmed, blurred, displayed with increased transparency) more than one or more second background objects, and one or more third background objects may cease to be displayed.

In some examples, electronic device 101 changes the level of immersion in accordance with user input. For example, electronic device 101 may detect input such as a twisting of an electromechanical crown button (or other mechanical input device or button) on the wearable device. In response to detecting the input, electronic device 101 may decrease or increase the level of immersion by an amount that is based on a direction and/or an amount of the twisting.

In some examples, electronic device 101 increases the level of immersion of virtual environment 301 by a first amount in response to detecting a first amount of rotation of the electromechanical crown button in a first direction. In some examples, electronic device 101 increases the level of immersion of virtual environment 301 by a second amount, different from the first amount, in response to detecting a second amount of rotation in the first direction.

In some examples, electronic device 101 decreases the level of immersion of virtual environment 301 by a third amount in response to detecting a third amount of rotation in a second direction, different from the first direction. In some examples, electronic device 101 decreases the level of immersion of virtual environment 301 by a fourth amount, different from the third amount, in response to detecting a fourth amount of rotation in the second direction.

In some examples, the amount of change of level of immersion based on rotation of the button is symmetrical. For example, electronic device 101 may change the level of immersion by a first amount of (e.g., increase or decrease the level of immersion) in response to detecting a first amount of rotation of the button (e.g., in a first or in a second direction). In some examples, the level of immersion is fixed based on the metadata associated with the webpage. In such examples, electronic device 101 may display the virtual environment 301 or may not display the virtual environment 301. Further, electronic device 101 may forgo changing of the level of immersion of virtual environment 301 in response to detecting inputs requesting changing of the level of immersion (e.g., the turning of the electromechanical crown button).

In some examples, a developer of the webpage associated with virtual object 340 may point to files such as scripts (e.g., JavaScript or other scripting modalities). For example, electronic device 101 may run one or more scripts in response to detecting the selection of selectable option 306, including, but not limited to, one or more calls to initiate a XR session and/or initiate display of a virtual environment. Electronic device 101 may detect a request to initiate the XR session and/or display of the virtual environment from a server, and in response, may initiate display of the virtual environment in accordance with the requested XR session. Electronic device 101 may send a request for assets and/or resources to display the virtual environment to one or more servers. In response to receiving the request, the one or more servers may communicate the requested assets and/or resources to electronic device 101. In response to receiving the requested assets and/or resources, electronic device 101 may render virtual content including virtual objects, visual indications, images, media, and/or additional or alternative virtual content and display images via display 120 corresponding to the virtual environment.

In some examples, electronic device 101 communicates with one or more devices using a first communication protocol and/or one or more devices using a second communication protocol to request, render images to display, and/or display the virtual environment. For example, electronic device 101 may send a request for assets to one or more servers using the first communication protocol. In response to receiving the requests, the one or more servers may send the assets to electronic device 101 and/or one or more devices designated for offloaded computing. For example, electronic device 101 may offload rendering to a desktop computer, a laptop, and/or a head-mounted device. In some examples, in response to receiving the assets, the offloading device may render one or more images based on the requested assets and/or additional or alternative information from electronic device 101, such as the position and/or orientation of electronic device 101 relative to three-dimensional environment 302. In some examples, electronic device 101 may request and/or receive rendered images from the device used to offload some or all of the rendering using the second communication protocol.

In the example of FIG. 5, electronic device 101 detects selection input including attention 314 directed to a scrollbar 308 while hand 310 forms an air pinch shape. In some examples, electronic device 101 scrolls the webpage based on input directed to scrollbar 308. In some examples, scrollbar 308 may be associated with navigating, initiating display of, and/or ceasing display of content in virtual object 340. For example, in response to detecting hand 310 maintaining the air pinch after detecting the selection input, electronic device 101 may scroll the webpage included in virtual object 340 based on movement of hand 310.

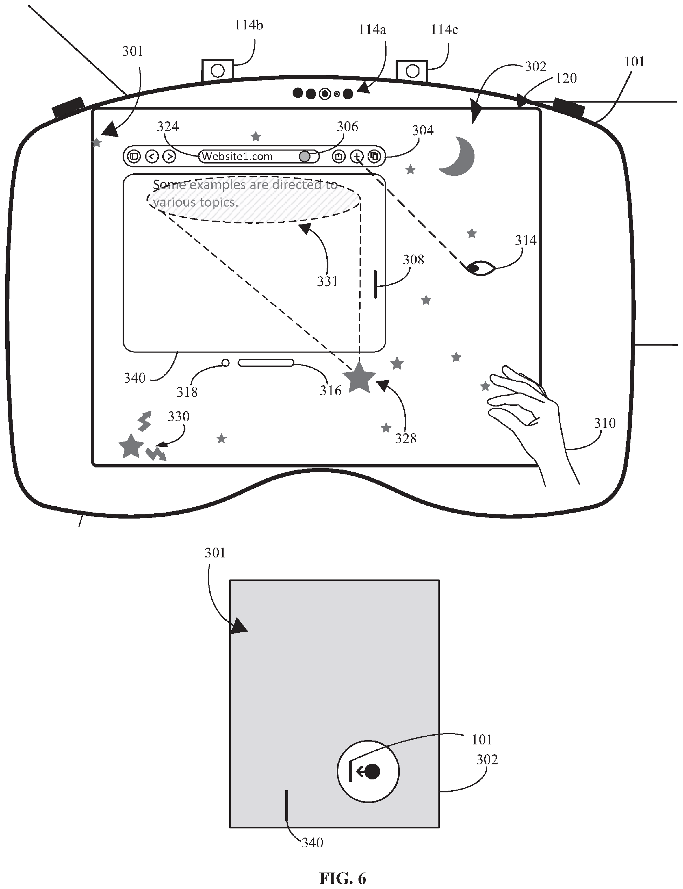

FIG. 6 illustrates an electronic device displaying content, modifying content, and ceasing display of content based on interaction with a user interface for a webpage according to some examples of the disclosure. For example, in the example of FIG. 6, electronic device 101 has moved some of the virtual stars and/or the virtual moon relative to corresponding locations shown in the example of FIG. 5 (e.g., in response to detecting the scrolling input based on movement of hand 310 from as shown in the example of FIG. 5 to as shown in the example of FIG. 6).

In some examples, electronic device 101 animates changes in virtual environment 301 based on changes in the webpage included in virtual object 340. For example, electronic device 101 detects upward movement of hand 310 from FIG. 5 to FIG. 6, and in response, animates a change in the position and/or orientation of the virtual stars. In some examples, the amount of change of virtual environment 301 is based on an amount of change of the webpage. For example, in accordance with a determination that the scrolling from FIG. 5 to FIG. 6 corresponds to a first amount of scrolling, electronic device 101 may move translate some or all of the virtual environment 301 by a first amount of translation. In accordance with a determination that the scrolling from FIG. 5 to FIG. 6 corresponds to a second amount of scrolling, different from the first amount of scrolling, electronic device 101 may move translate some or all of the virtual environment 301 by a second amount of translation. In some examples, the movement of virtual environment 301 is different from a parallax effect of content that is displayed in the webpage based on scrolling of the webpage. For example, the movement simulated by the parallax effect of background images in virtual object 340 may include translating content in the webpage by one or more first amounts. In some examples, the change and/or movement of content include in virtual environment 301 may optionally include movement and/or change in position and/or orientation of content in virtual environment 301, such as movement in several directions that differ from the direction of translation used to display the parallax effect.

In some examples, electronic device 101 changes a size of virtual content included in virtual environment 301 based on the changes to the webpage. For example, electronic device 101 in the example of FIG. 6 displays star 330 at a size that is larger than before detecting input scrolling the webpage (e.g., as shown in the example of FIG. 5). In some examples, electronic device 101 decreases a size of some or all of the virtual content included in virtual environment 301.

In some examples, electronic device 101 displays a virtual lighting effect. In some examples, the virtual lighting effect is based on changes to the webpage made by electronic device 101 in response to input initiating display of virtual environment 301 and/or input changing the webpage. For example, in the example of FIG. 6, electronic device displays a simulated light source corresponding to star 328 which is cast on a region 331 of virtual object 340. In some examples, the simulated light source corresponds to virtual content displayed in virtual environment 301. For example, star 328 may virtually illuminate text describing star 328 that is included in virtual object 340 and/or may virtually illuminate a region surrounding the text describing star 328 in response to detecting a scrolling position on the webpage correspond to a particular scrolling position (e.g., correspond to the text). Concurrently, electronic device 101 may forgo displaying virtual illumination of other portions of the virtual object 340 that do not correspond to star 328.

In some examples, the virtual lighting is based on an environmental lighting map. In some examples, the environmental lighting map indicates the manner by which reflections and/or ambient virtual lighting are displayed by electronic device 101. For example, the environmental lighting map may include one or more images. In some examples, the one or more images include the colors, simulated light intensity, the position of textures and/or objects, the contrast, the saturation, and/or additional or alternative information that electronic device 101 may use to display ambient and/or directional virtual lighting within the virtual environment. In some examples, the environmental lighting map include the position and/or orientation of one or more virtual light sources. In some examples, the virtual light sources are used to determine the position and/or appearance of the virtual environment and/or other objects that are separate from the virtual environment. For example, electronic device 101 may use the environmental lighting map to extract and/or determine the intensity, color, falloff, and/or point and/or directional light sources in the virtual environment.

In some examples, the electronic device 101 uses the environmental lighting map to virtually illuminate content in the virtual environment (e.g., textures, objects, media, and/or some combination thereof) that is indicated by the developer to be lit by a lighting source. In some examples, electronic device 101 additionally or alternatively uses the environmental lighting map to virtually illuminate content that is not indicated by the developer, such as virtual objects including a virtual window, volumetric objects, system user interface such as notifications and/or keyboards, and/or the like that are not included in the virtual environment but are displayed concurrently with the virtual environment. In some examples, electronic device 101 displays a virtual object not included in the virtual environment with a first virtual lighting effect when the virtual environment indicated by the developer is not being displayed and displays the virtual object with a second lighting effect, different from the first lighting effect, when the virtual environment is being displayed. For example, electronic device 101 optionally displays a virtual illumination of a virtual object based on one or more light sources in a three-dimensional environment of electronic device 101 as indicated by the environmental lighting map, and/or optionally changes the position, intensity, shadows, color and/or other aspects of the illumination of the virtual object in response to detecting an input changing the currently displayed virtual environment and/or ceasing display of the virtual environment.

In some examples, virtual illumination may include displaying one or more colors, levels of brightness, levels of contrast, and/or opacity of regions of a virtual object that are subject of the virtual illumination. In some examples, the simulated light source is not displayed. In some examples, the simulated light source has a position, orientation, a type of light, an intensity, a fall-off range, and/or a shape. In some examples, the aforementioned characteristics of the simulated light source are similar to characteristics of a physical light source.

In the example of FIG. 6, electronic device 101 detects selection input including attention 314 and hand 310 forming an air shape directed to selectable option 344. In response to detecting the selection input as shown in the example of FIG. 6, electronic device 101 may add a new browsing tab.

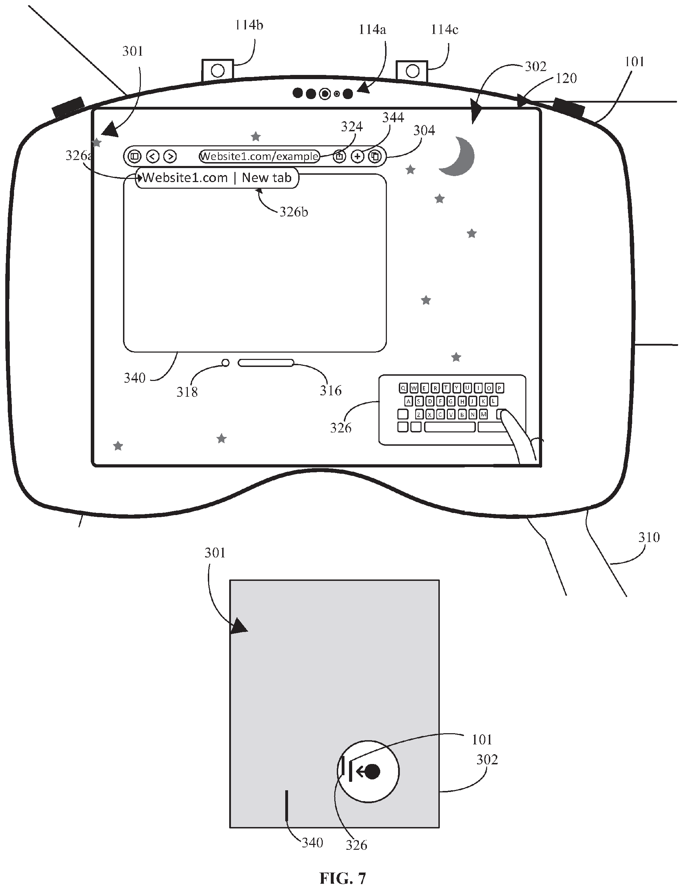

From FIG. 6 to FIG. 7, electronic device 101 ceases display of a first webpage and initiates display of a tab 326a representative of the first webpage (e.g., the webpage illustrated in the example of FIG. 6). FIG. 7 illustrates an electronic device displaying a new web browsing tab according to some examples of the disclosure. In the example of FIG. 7, electronic device 101 displays a second tab 326b, different from tab 326a, corresponding to the URL listed in address bar 324. In some examples, electronic device 101 detects input such as entry directed to virtual keyboard 326. In response to detecting the input, electronic device 101 may display text directed to a field selected based on a selection input (e.g., selection input directed to address bar 324). In some examples, in response to detecting input selecting and/or adding a tab that is not associated with a currently displayed virtual environment, electronic device 101 ceases display of the currently display virtual environment. For example, electronic device 101 optionally ceases display of virtual environment in response to detecting the selection input adding a new tab as illustrated in FIG. 6.

In the example of FIG. 7, electronic device 101 has detected text entry and displayed corresponding text indicating a URL. The URL (e.g., "Webpage1.com/example") has a same domain as the URL illustrated in the example of FIG. 6 (e.g., "Webpage1.com"). Accordingly, a developer of the website corresponding to the URLs depicted in the example of FIG. 6 and FIG.7 may be a same developer. As described further herein, electronic device 101 may maintain display of virtual environment 301 in response to detecting input navigating to a webpage that has designated a same virtual environment (e.g., from a same developer) as a currently displayed virtual environment. Stated an additional way, electronic device 101 may maintain display of virtual environment when navigating to a new webpage if the new webpage is associated with the same virtual environment.

In the example of FIG. 7, electronic device 101 detects selection input including movement of hand 310 to within a threshold distance (e.g., 0, 0.001, 0.005, 0.01, 0.05, 0.075, 0.1, or 0.25m) of a virtual return key included in virtual keyboard 326. In some examples, electronic device 101 navigates to a second webpage, different from the first webpage, which corresponds to the URL illustrated in the example of FIG. 7 in response to detecting the selection input. From FIG. 7 to FIG. 8, electronic device 101 initiates display of the second webpage (e.g., "Webpage1.com/example") in virtual object 340 and address bar 324.

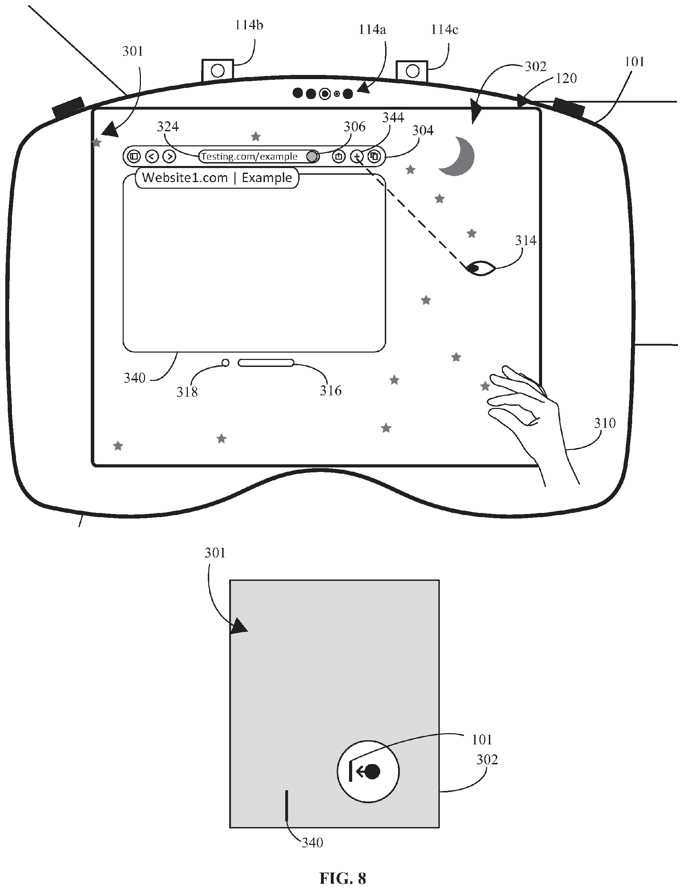

FIG. 8 illustrates an electronic device maintain display of a virtual environment according to some examples of the disclosure. In the example of FIG. 8, electronic device 101 forgoes changing of display of selectable option 306 in response to detecting the selection input illustrated in the example of FIG. 7. In some examples, electronic device 101 forgoes changing selectable option 306 because the developer of the second webpage has indicated that the virtual environment 301 displayed by electronic device 101 is a same virtual environment as indicated by the second webpage.

In some examples, in response to detecting selection input directed to selectable option 306 while displayed as shown in the example of FIG. 8, electronic device 101 forgoes display of a selectable option to initiate display of a virtual environment or displays the selectable option with an appearance indicating that the virtual environment is already displayed. For example, electronic device 101 may display a menu (e.g., similar to or the same as menu 320 described with reference to FIG. 4). In some examples, the menu may include a selectable option for displaying the virtual environment, but the selectable option may be displayed with a visual appearance to indicate that the virtual environment is already active (e.g., bolding, shading, contrast, size, and/or color that differs from bolding, shading, contrast, size, and/or color of the selectable option when the virtual environment is not displayed). In response to detecting selection input directed toward the selectable option displayed with the visual appearance, electronic device 101 may cease display of virtual environment 301.

In the example of FIG. 8, electronic device 101 detects selection input including attention 314 and hand 310 forming an air pinch directed to selectable option 344. In response to detecting the selection input as shown in the example of FIG. 8, electronic device 101 may add a new browsing tab.

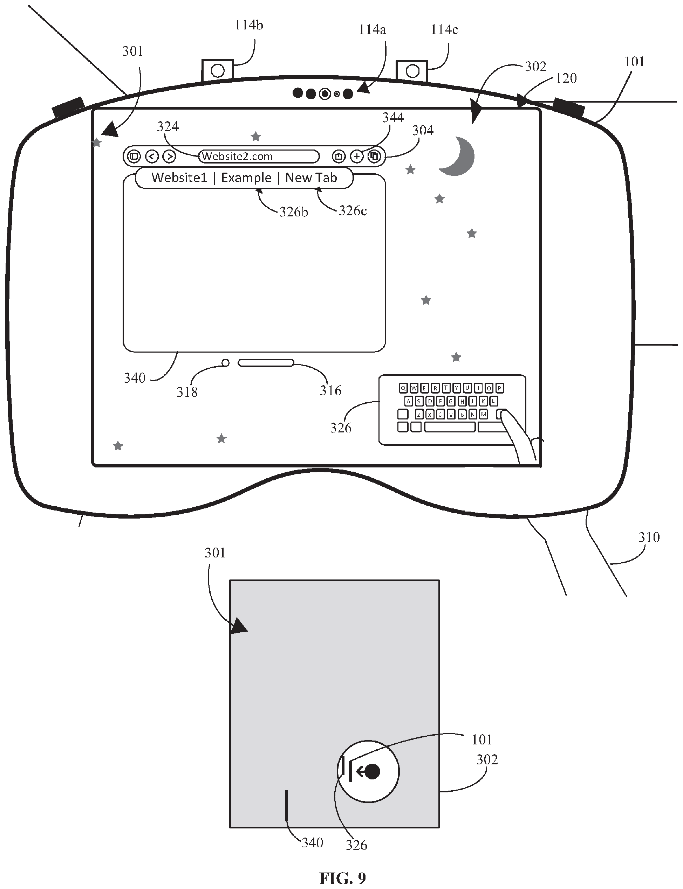

From FIG. 8 to FIG. 9, electronic device 101 ceases display of the second webpage (e.g., "Webpage1.com/example") and initiates display of a tab 326b representative of the second webpage (e.g., the webpage illustrated in the example of FIG. 8). FIG. 9 illustrates an electronic device displaying a new web browsing tab according to some examples of the disclosure. In the example of FIG. 9 electronic device 101 displays a third tab 326c, different from tab 326a and tab 326b, corresponding to the URL listed in address bar 324 (e.g., "Webpage2.com"). In some examples, electronic device 101 detects input such as entry directed to virtual keyboard 326. In response to detecting the input, electronic device 101 may display text directed to a field selected previously selected based on a selection input (e.g., selection input directed to address bar 324).

In the example of FIG. 9, electronic device 101 has detected text entry and displayed corresponding text indicating a URL. The URL (e.g., "Webpage2.com") has a different domain as the URL illustrated in the example of FIG. 8 (e.g., "Webpage1.com/example"). Accordingly, a developer of the website corresponding to the URLs depicted in the example of FIG. 8 and FIG. 9 may be different respective developers. As described further herein, electronic device 101 may present an indication that a virtual environment different from a currently displayed virtual environment may be available for display. In some examples, electronic device 101 at least temporarily maintains display of virtual environment 301 in response to detecting input navigating to the webpage associated with the different developer. In some examples, electronic device 101 presents selectable option 306 and/or additional or alternative visual indications and/or selectable options to facilitate changing of which virtual environment is displayed by electronic device 101. As described above, electronic device 101 may cease display of virtual environment 301 in response to detecting the input navigating to the webpage associated with the different developer.

In the example of FIG. 9, electronic device 101 detects selection input including movement of hand 310 to within a threshold distance (e.g., 0, 0.001, 0.005, 0.01, 0.5, 0.075, 0.1, or 0.25m) of a virtual return key included in virtual keyboard 326. In some examples, electronic device 101 navigates to the third webpage, different from the first and the second webpages, in response to detecting the selection input shown in the example of FIG. 9.

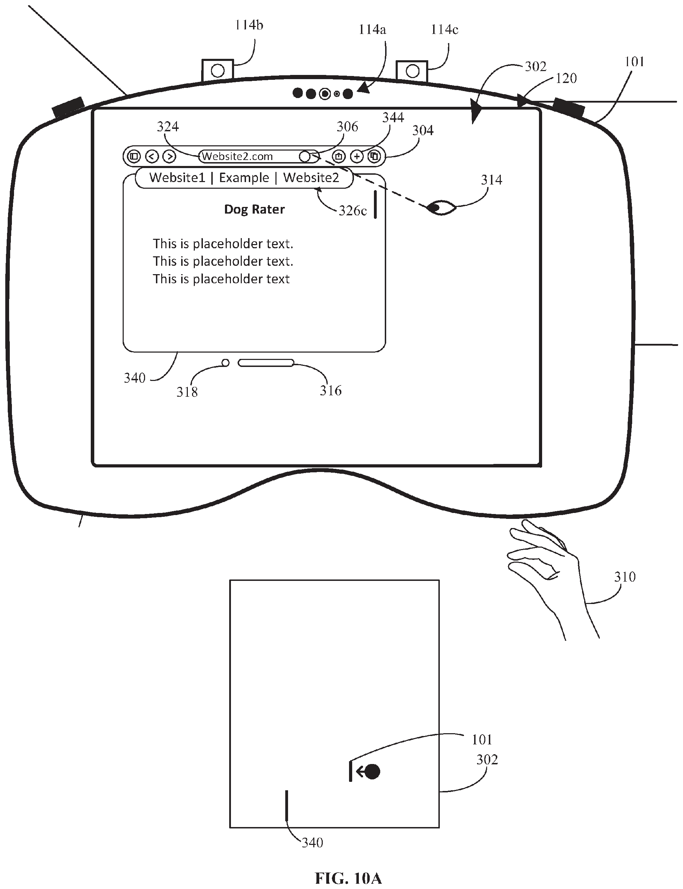

FIG. 10A illustrates an electronic device ceasing display of a virtual environment according to some examples of the disclosure. In the example of FIG. 10A, electronic device 101 ceases display of virtual environment 301 (e.g., corresponding to the first and/or second webpage as described with reference to FIGs. 4-8) including the virtual stars and the virtual moon in response to detecting the selection input illustrated in the example of FIG. 9. In this way, in the example of FIG. 10A, electronic device 101 may forgo display of the virtual environment corresponding to a developer-specified webpage that is different from a webpage included in virtual object 340. In some examples, electronic device 101 maintains display of virtual environment 301 independently of whether the currently displayed tab included in virtual object 340 corresponds to the virtual environment 301. For example, electronic device 101 may maintain display of virtual environment in response to detecting the selection input as illustrated in the example of FIG. 9.

In the example of FIG. 10A, virtual object 340 includes content corresponding to the third webpage (e.g., "Webpage2"). In the example of FIG. 10A, tab 326c is updated relative to as shown in the example of FIG. 9 to indicate the name of the third webpage.

In the example of FIG. 10A, electronic device 101 changes display of selectable option 306 in response to detecting the selection input illustrated in the example of FIG. 9. In some examples, electronic device 101 changes the visual appearance of selectable option 306 to indicate that the virtual environment specified by the developer of the third webpage differs from the currently displayed virtual environment 301. For example, the visual appearance of selectable option 306 in the example of FIG. 10A may be similar to, or the same as illustrated in the example of FIG. 3.

In some examples, electronic device 101 forgoes changing the visual appearance of selectable option 306 in response to detecting the selection input illustrated in the example of FIG. 9. For example, electronic device 101 may maintain display of selectable option 306 from that shown in the example of FIG. 9 in response to such selection input. In these and other examples, selectable option 306 may serve to indicate that an immersive virtual environment is currently being displayed, optionally irrespective of the specific virtual environment that is displayed.

In some examples, electronic device 101 displays additional visual indications and/or selectable options (e.g., buttons, icons, text, media, and/or some combination thereof) to indicate that a virtual environment different from virtual environment 301 is available as specified by the developer associated with the third webpage. For example, electronic device 101 may concurrently display an additional icon overlaying address bar 324 with other visual elements shown in the example of FIG. 10A. Additionally or alternatively, electronic device 101 may display such visual indications and/or selectable options in response to detecting selection of selectable option 306 while displayed as shown in the example of FIG. 10A.

In the example of FIG. 10A, electronic device 101 detects input directed to selectable option 306. In some examples, electronic device 101 displays a menu that is similar to, includes some or all elements of, and/or is the same as menu 320 described with reference to FIG. 4. In some examples, menu 320 includes a selectable option that is selectable to initiate display of the virtual environment embedded in metadata by the developer of the third webpage. In some examples, the selectable option is similar to, or the same as selectable option 306 described with reference to FIG. 4. In some examples, in response to detecting selection of the selectable option 306, and/or while the three-dimensional environment includes the virtual content shown in the example of FIG. 10A, electronic device 101 displays a virtual environment picker user interface (e.g., including some or all of the selectable options illustrated in menu 320 in the example of FIG. 4). In some examples, the virtual environment picker user interface includes a representation of virtual environment 301, and additionally or alternatively includes a representation of the virtual environment associated with the third webpage. In some examples, the selectable option is different from the selectable option described with reference to FIG. 4. For example, the selectable option may include text to "change" the virtual environment.

For example, the picker user interface may include a selectable option that is selectable to toggle between virtual environment 301 and the virtual environment associated with the third webpage. Although the selection input depicted in the example of FIG. 10A including attention 314 directed to grabber 316 and the air hand shape forming an air pinch may result in electronic device 101 displaying a menu, it is understood that the selection input may be representative of a plurality of inputs to display a representation of a virtual environment that differs from virtual environment 301 and/or selection of the representation.

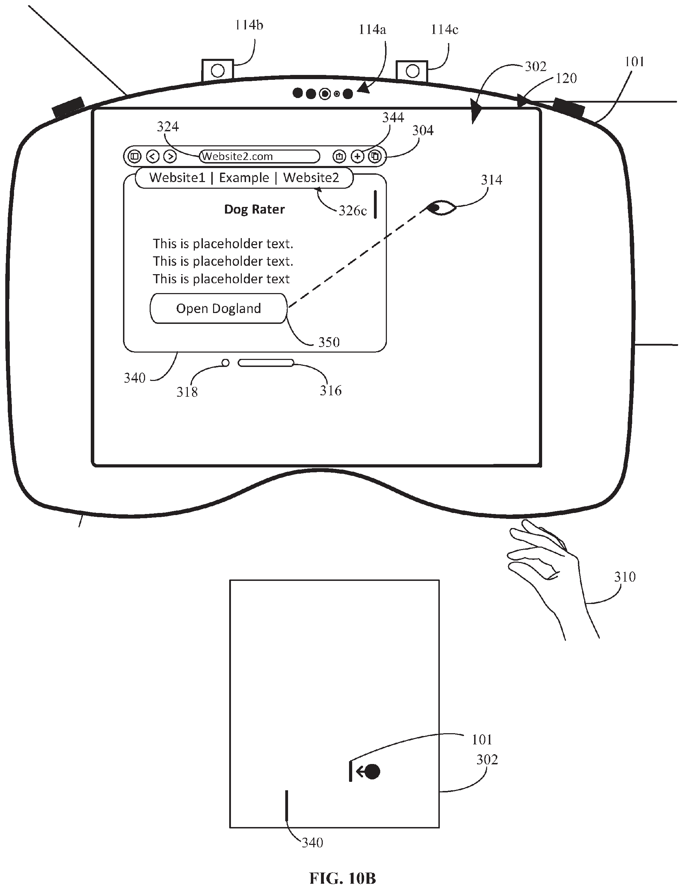

FIG. 10B illustrates an electronic device ceasing display of a virtual environment according to some examples of the disclosure, and depicts an example similar to as described with reference to FIG. 10A. In some examples, electronic device 101 facilitates display of a virtual environment based on input directed to content from a developer. For example, as shown in FIG. 10B, electronic device 101 displays selectable option 350, which may be a button or other virtual content authored by the developer of the website included in virtual object 340. In this way, developers may create webpages that includes content which, when selected by the user, may cause electronic device 101 to display a virtual environment indicated by the developers.

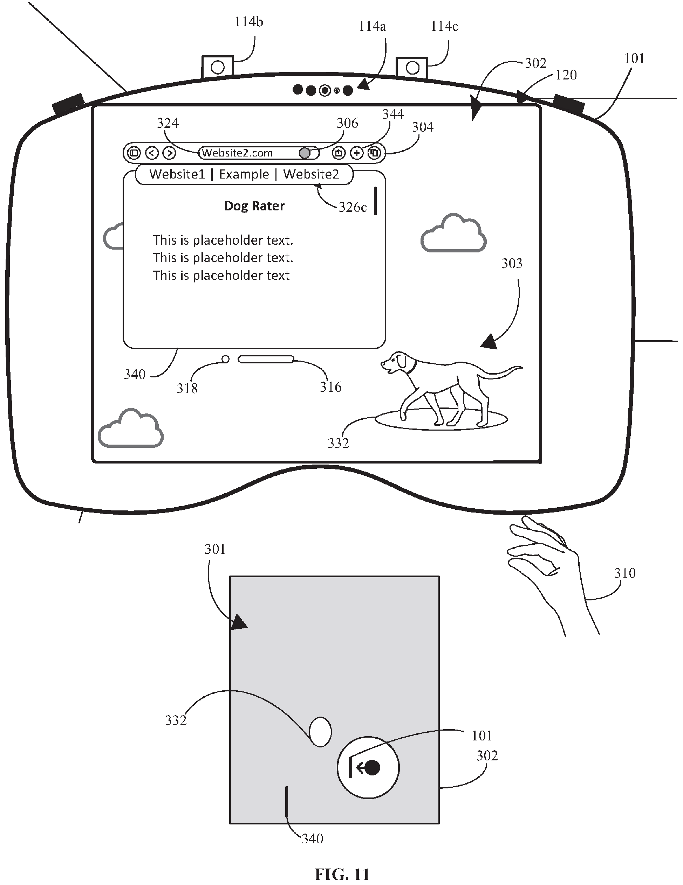

In some examples, in response to detecting the input optionally including the attention 314 of the user and an air pinch performed by hand 310, electronic device 101 performs one or more of the operations described with reference to FIG. 11 further below, including presentation of a virtual environment. In some examples, in response to detecting input directed to content in a webpage, electronic device 101 displays a confirmation prompt before displaying the virtual environment. In some embodiments, the content includes a button, media, and/or scrollable content displayed by electronic device 101. In response to detecting input approving the launching of the virtual environment, electronic device 101 may display the virtual environment in accordance with the specifications provided by the developer. In response to detecting input rejecting the launching of the virtual environment, electronic device 101 may forgo the launching of the virtual environment.

In some examples, as shown in FIG. 10B, electronic device 101 performs some or all of operations described with reference to FIG. 10A, and forgoes display of selectable option 306 as shown in FIG. 10A.

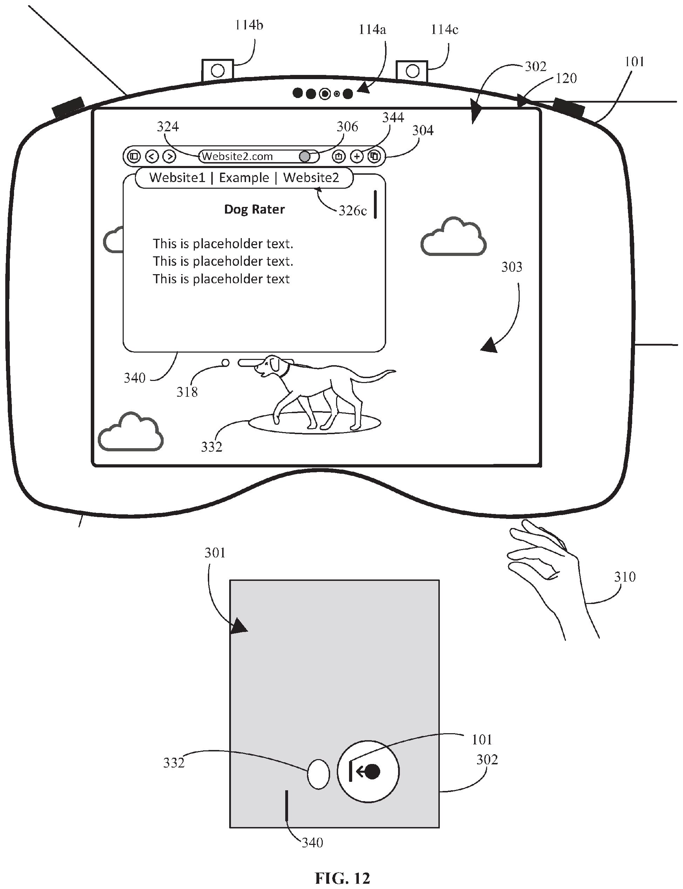

The examples of FIGs. 11 and 12 illustrate that a virtual environment that is presented to the user may be based on a specification that is provided by the developer. In some examples, the developer may control what is presented and/or displayed to the user, including the inclusion of, the position of, and/or orientation of virtual content within the virtual environment and/or the placement of the user within the virtual environment.

FIG. 11 illustrates an electronic device displaying a virtual environment that is different from a previously displayed virtual environment according to some examples of the disclosure. In the example of FIG. 11, electronic device 101 displays a developer-specified virtual environment that differs from a previously displayed virtual environment. For example, virtual environment 303 as shown in the example of FIG. 11 is associated with the third webpage (e.g., "Webpage2.com"). In some examples, electronic device 101 displays virtual environment 303 in response to detecting one or more inputs selecting virtual environment for display by the user (e.g., as described with reference to FIG. 10A and/or 10B). In some examples, virtual environment 303 has one or more characteristics that are similar to, the same as, and/or correspond to one or more characteristics described with reference to virtual environment 301 herein. For example, virtual environment 303 may include virtual objects, textures, images, media (e.g., pre-recorded and/or live media), and/or some combination thereof. As an example, virtual environment 303 includes a representation 332 which includes a virtual dog and a colored user interface platter underneath the virtual dog.

FIG. 12 illustrates an electronic device displaying a virtual environment that is different from a previously displayed virtual environment according to some examples of the disclosure. For example, a developer of the webpage included in virtual object 340, as shown in FIGs. 11 and 12, optionally specifies how virtual content included in a virtual environment is presented to the user. In FIG. 11, representation 332 is displayed at a first location based on a first specification received from the developer indicating that representation 332 is to be displayed at the first location. In FIG. 12, representation 332 is displayed at a second location, different from the first location, in response to one or more of the inputs described with reference to FIGs. 10A and 10B. Further, representation 332 is displayed at the second location based on a second specification, optionally different from the first specification, received from the developer indicating that representation 332 is to be displayed at the second location. In some examples, representation 332 is displayed at a respective location as specified by the developer.

In some examples, electronic device 101 arranges the location of media included in the virtual environment based on the specifications provided by the developer. For example, in response to detecting web content indicating that a video is to be displayed in a virtual window at a respective distance from the viewpoint of the user of electronic device 101, electronic device 101 may display the virtual window at the respective distance. In accordance with a determination that the respective distance is a first distance, electronic device 101 may display the virtual window including the video at the first distance. In accordance with a determination that the respective distance is a second distance, electronic device 101 may display the virtual window including the video at the second distance.

In some examples, electronic device 101 arranges the location of the user relative to the virtual environment based on the developer specifications. For example, in response to detecting web content indicating that the user of electronic device 101 is to be displayed at a first position and/or orientation relative to a virtual environment, electronic device 101 may display the virtual environment such that the user is located at the first position and/or with the first orientation, such as in the middle of a virtual lake. Additionally or alternatively, in response to detecting web content indicating that the user of electronic device 101 is to be displayed at a second position and/or orientation relative to a virtual environment, electronic device 101 may display the virtual environment such that the user is located at the second position and/or with the first orientation, such as on the shores of the lake, facing toward the middle of the lake.

In some examples, electronic device 101 transitions between virtual environments based on scrolling of the input, such as transitioning between virtual environment 301 and virtual environment 303 (e.g., when the developer of a webpage indicates to electronic device 101 using metadata to use and/or transition between virtual environment 301 and 303). For example, electronic device 101 may cease display of virtual environment 301 and initiate display of virtual environment 303 in accordance with a determination that a scrolling position in a webpage is past a threshold scrolling position.

In some examples, electronic device 101 ceases display of virtual environment 301 in accordance with a determination that a representation of a webpage corresponding to virtual environment 301 is not displayed. For example, in response to detecting input changing a web browsing tab to a webpage that does not correspond to virtual environment 301, in response to detecting input hiding or closing virtual object 340 (e.g., different from input moving the virtual object 340 outside a viewport of the electronic device 101 and/or different from changing of a position and/or orientation of electronic device 101 such that the viewpoint of electronic device 101 does not include the virtual object 340), and/or in response to receiving an indication that virtual object 340 should be hidden from an application running on electronic device 101, electronic device 101 may cease display virtual environment 301.

In some examples, electronic device 101 displays a visual emphasis of some or all content included in a virtual environment. For example, in accordance with a determination that certain criteria are satisfied with respect to the user's scrolling position, interaction with the webpage (e.g., selection of content, highlighting of content, consumption of content), electronic device 101 may display a virtual lighting effect cast on one or more portions of a virtual environment and/or assets in the virtual environment. In some examples, the developer of the webpage may indicate using scripts and/or metadata the criteria and/or the manner by which electronic device 101 displays the visual emphasis.

In general, the specifications from the developer may be used to drive the presentation of content included in the virtual environment. For example, electronic device 101 may detect input scrolling, selecting of content, highlighting of content, and/or changing between pages of web content (e.g., included in a webpage in virtual object 340). In response to detecting such input, electronic device 101 may change visual characteristics such as opacity and/or brightness of virtual content, move virtual content, display new virtual content, cease display of virtual content, dock virtual content to occupy a predetermined position within a virtual three-dimensional environment, animate the virtual three-dimensional environment, change a displayed virtual environment, change the viewpoint of the user relative to the three-dimensional environment, and/or any combination of changes to virtual content thereof, in accordance with a determination that the web content has been configured in accordance with the specifications from the developer to perform such changes to virtual content based on user input.

In some examples, the developer of a webpage specifies characteristics of a skybox, sky sphere, and/or additional or alternative three-dimensional shape used to map developer-provided images that are projected onto a shape that forms the dimensions of an immersive virtual environment. For example, the developer may indicate metadata and/or values of a skybox height, width, and/or depth, a height of a floor relative to the skybox, a shape of a sky shape (e.g., skybox, sky sphere, or additional or alternative shape), the depth at which images provided by the developer are to be displayed relative to a position and/or orientation of the electronic device relative to the virtual environment, the availability and/or use of a three-dimensional USD file for generating the virtual environment, and/or some combination thereof. In some examples, the electronic device projects one or more images received from one or more servers indicated by the developer. In some examples, the electronic device projects the images onto one or more shapes specified by the developer, such as asymmetrical shapes and/or customized shapes comprising various curves and/or surfaces defined by information from the developer (e.g., included in developer-provided metadata).

It is understood that the examples shown and described herein are merely exemplary and that additional and/or alternative elements may be provided within the three-dimensional environment for presenting selectable options that are selectable to display virtual environments with a level of immersion relative to at a three-dimensional environment that is greater than a threshold level of immersion. It should be understood that the appearance, shape, form, and size of each of the various user interface elements and objects shown and described herein are exemplary and that alternative appearances, shapes, forms and/or sizes may be provided. For example, the virtual objects representative of application windows (e.g., virtual window 340) may be displayed with alternative shapes than those shown, such as a rectangular shape, circular shape, triangular shape, volumetric shape etc. In some examples, the various selectable options (e.g., selectable option 306, address bar 324, selectable option 342, and/or selectable option 344) described herein may be selected verbally in response to electronic device detecting verbal commands (e.g., "select option" or "select virtual object" verbal command). Additionally or alternatively, in some examples, the various selectable options, user interface elements, control elements, etc. described herein may be selected and/or manipulated via user input received via one or more input devices in communication with the electronic device (or electronic devices). For example, selection input may be received via physical input devices, such as a mouse, trackpad, keyboard, etc. in communication with the electronic devices (or electronic devices), or a physical button integrated with the electronic devices (or electronic devices).

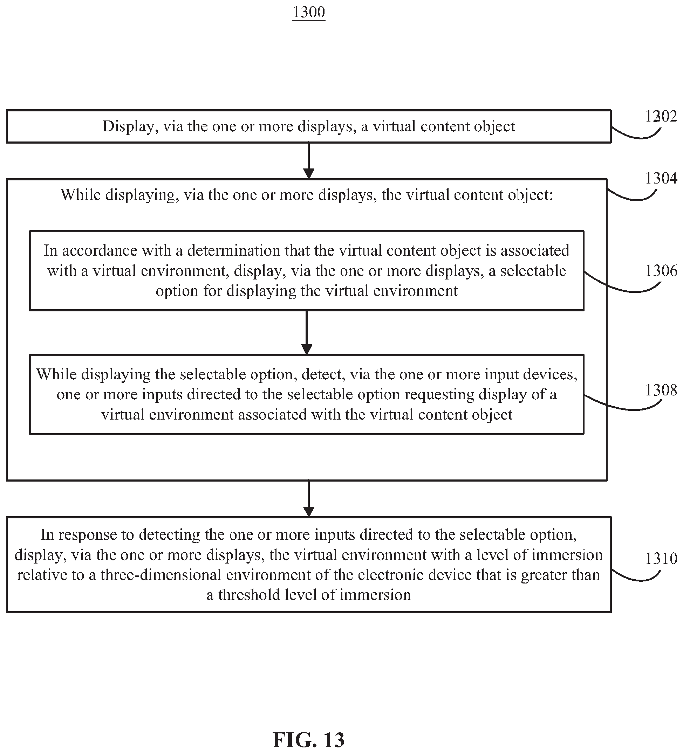

FIG. 13 illustrates a flow diagram of an example process for displaying a developer-provided virtual environment with a level of immersion that is greater than a threshold level of immersion in a three-dimensional environment according to some examples of the disclosure. In some examples, process 1300 is performed at an electronic device in communication with a display and one or more input devices. In some examples, the electronic device is optionally a head-mounted display similar or corresponding to electronic device 201 of FIG. 2A or a mobile electronic device similar or corresponding to electronic device 260 of FIG. 2B. As shown in the example of FIG. 13, in some examples, at 1302, the electronic device displays, via the one or more displays, a virtual content object. For example, the electronic device (e.g., electronic device 101 in the example of FIG. 4) presents a virtual environment, such as virtual environment 301 consuming visibility of portions of the physical environment.

In some examples, at 1304, while displaying, via the one or more displays, the virtual content object, in accordance with a determination that the virtual content object is associated with a virtual environment, the electronic device displays, via the one or more displays, a selectable option indicating that the virtual environment is available for display for displaying the virtual environment. For example, the electronic device displays selectable option 306 as shown in the example of FIG. 3. In some examples, at 1306, while displaying, via the one or more displays, the virtual content object, while displaying the selectable option, the electronic device detects, via the one or more input devices, one or more inputs directed to the selectable option requesting display of a virtual environment associated with the virtual content object. For example, the electronic device detects selection input including attention 314 and/or an air shape formed by hand 310 as shown in the examples of FIG. 3 and/or FIG. 4. In some examples, in response to detecting the one or more inputs directed to the selectable option, the electronic device displays, via the one or more displays, the virtual environment with a level of immersion relative to a three-dimensional environment of the electronic device that is greater than a threshold level of immersion. For example, electronic device 101 displays virtual environment 301 with a level of immersion greater than a threshold level of immersion as shown in the example of FIG. 5.

It is understood that process 1300 is an example and that more, fewer, or different operations can be performed in the same or in a different order. Additionally, the operations in process 1300 described above are, optionally, implemented by running one or more functional modules in an information processing apparatus such as general-purpose processors (e.g., as described with respect to FIGs. 2A-2B) or application specific chips, and/or by other components of FIGs. 2A-2B.

Therefore, according to the above, some examples of the disclosure are directed to a method, comprising at an electronic device in communication with one or more input devices and one or more displays, displaying, via the one or more displays, a virtual content object. In some examples, the method can further comprise, while displaying, via the one or more displays, the virtual content object, in accordance with a determination that the virtual content object is associated with a virtual environment, displaying, via the one or more displays, a selectable option for displaying the virtual environment, and while displaying the selectable option, detecting, via the one or more input devices, one or more inputs directed to the selectable option requesting display of a virtual environment associated with the virtual content object, and in response to detecting the one or more inputs directed to the selectable option, displaying, via the one or more displays, the virtual environment with a level of immersion relative to a three-dimensional environment of the electronic device that is greater than a threshold level of immersion.

In some examples, changing of the virtual environment includes ceasing display of virtual content that was displayed when the input causing the one or more modifications to the virtual content object is detected.

In some examples, changing of the virtual environment includes displaying, via the one or more displaying, a visual emphasis to at least a portion of the virtual environment.

In some examples, changing of the virtual environment includes, ceasing display of a first virtual environment, and initiating display of a second virtual environment, different from the first virtual environment. In some examples, the input causing one or more modifications to the virtual content object includes input changing a currently selected webpage within a web browsing user interface that is associated with the virtual content object. In some examples, the input causing one or more modifications to the virtual content object includes input scrolling virtual content.

In some examples, the virtual content object includes a plurality of browsing tabs including a first browsing tab and a second browsing tab. In some examples, the method further comprises, while displaying the virtual environment and virtual browser content associated with the first browsing tab, detecting, via the one or more input devices, a second input causing one or more modifications to the virtual content object including selection of the second browsing tab different from the first browsing tab, and in response to detecting the second input, in accordance with a determination that the second browsing tab is associated with the virtual environment, forgoing modification of the virtual environment.

In some examples, displaying the virtual environment includes displaying one or more animations of one or more portions of the virtual environment.

In some examples, displaying the virtual environment further includes displaying a virtual lighting effect within the virtual environment. In some examples, displaying the virtual lighting effect includes applying the virtual lighting effect cast on the virtual content object.

In some examples, the method further comprises, while displaying the virtual content object and the virtual environment, detecting, via the one or more input devices, an input requesting display of web content according to a first mode, and in response to detecting the input requesting display of the web content in the first mode, ceasing display of the virtual environment, and displaying, via the one or more displays, the web content according to the first mode.

In some examples, the virtual environment is displayed based on a mapping between an image that corresponds to the virtual environment projected onto a three-dimensional shape.

In some examples, the virtual content object is associated with the virtual environment based on metadata associated with a provider of web content included in the virtual content object indicating availability of the virtual environment to the electronic device.

Some examples of the disclosure are directed to an electronic device, comprising: one or more processors; memory; and one or more programs stored in the memory and configured to be executed by the one or more processors, the one or more programs including instructions for performing any of the above methods.

Some examples of the disclosure are directed to a non-transitory computer readable storage medium storing one or more programs, the one or more programs comprising instructions, which when executed by one or more processors of an electronic device, cause the electronic device to perform any of the above methods.

Some examples of the disclosure are directed to an electronic device, comprising one or more processors, memory, and means for performing any of the above methods.

Some examples of the disclosure are directed to an information processing apparatus for use in an electronic device, the information processing apparatus comprising means for performing any of the above methods.

The present disclosure contemplates that in some examples, the data utilized can include personal information data that uniquely identifies or can be used to contact or locate a specific person. Such personal information data can include demographic data, content consumption activity, location-based data, telephone numbers, email addresses, social media ID's, home addresses, data or records relating to a user's health or level of fitness (e.g., vital signs measurements, medication information, exercise information), date of birth, or any other identifying or personal information. Specifically, as described herein, one aspect of the present disclosure is tracking a user's biometric data.

The present disclosure recognizes that the use of such personal information data, in the present technology, can be used to the benefit of users. For example, personal information data can be used to display suggested text that changes based on changes in a user's biometric data. For example, the suggested text is updated based on changes to the user's age, height, weight, and/or health history.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data can be governed by federal and/or state laws, such as the Health Insurance Portability and Accountability Act (HIPAA); whereas health data in other countries can be subject to other regulations and policies and should be handled accordingly. Hence different privacy practices should be maintained for different personal data types in each country.

Despite the foregoing, the present disclosure also contemplates examples in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to enable recording of personal information data in a specific application (e.g., first application and/or second application). In addition to providing "opt in" and "opt out" options, the present disclosure contemplates providing notifications relating to the access or use of personal information. For instance, a user can be notified upon initiating collection that their personal information data will be accessed and then reminded again just before personal information data is accessed by the one or more devices.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification can be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

The foregoing description, for purpose of explanation, has been described with reference to specific examples. However, the illustrative descriptions above are not intended to be exhaustive or to limit the disclosure to the precise forms disclosed. Many modifications and variations are possible in view of the above teachings. The examples were chosen and described in order to best explain the principles of the disclosure and its practical applications, to thereby enable others skilled in the art to best use the disclosure and various described examples with various modifications as are suited to the particular use contemplated.

## Claims

1. A method comprising:
at an electronic device in communication with one or more input devices and one or more displays:
displaying, via the one or more displays, a virtual content object;
while displaying, via the one or more displays, the virtual content object:
in accordance with a determination that the virtual content object is associated with a virtual environment, displaying, via the one or more displays, a selectable option for displaying the virtual environment; and
while displaying the selectable option, detecting, via the one or more input devices, one or more inputs directed to the selectable option requesting display of the virtual environment associated with the virtual content object; and
in response to detecting the one or more inputs directed to the selectable option, displaying, via the one or more displays, the virtual environment with a level of immersion relative to a three-dimensional environment of the electronic device that is greater than a threshold level of immersion.

2. The method of claim 1, further comprising:
while displaying the virtual environment, detecting, via the one or more input devices, an input causing one or more modifications to the virtual content object; and
in response to detecting the input modifying the virtual content object, changing, via the one or more displays, the virtual environment in accordance with the one or more modifications to the virtual content object.

3. The method of claim 2, wherein changing of the virtual environment includes initiating display of virtual content that was not displayed prior to detecting the input causing the one or more modifications to the virtual content object.

4. The method of any of claims 2-3, wherein changing of the virtual environment includes displaying, via the one or more displaying, a visual emphasis to at least a portion of the virtual environment.

5. The method of any of claims 2-4, wherein changing of the virtual environment includes:
ceasing display of a first virtual environment, and
initiating display of a second virtual environment, different from the first virtual environment.

6. The method of any of claims 2-5, wherein the input causing one or more modifications to the virtual content object includes input scrolling virtual content.

7. The method of any of claims 1-6, wherein the virtual content object includes a plurality of browsing tabs including a first browsing tab and a second browsing tab, the method further comprising:
while displaying the virtual environment and virtual browser content associated with the first browsing tab, detecting, via the one or more input devices, a second input causing one or more modifications to the virtual content object including selection of the second browsing tab different from the first browsing tab; and
in response to detecting the second input:
in accordance with a determination that the second browsing tab is associated with the virtual environment, forgoing modification of the virtual environment.

8. The method of any of claims 1-7, wherein displaying the virtual environment includes displaying one or more animations of one or more portions of the virtual environment.

9. The method of any of claims 1-8, wherein displaying the virtual environment further includes displaying a virtual lighting effect within the virtual environment.

10. The method of claim 9, wherein displaying the virtual lighting effect includes applying the virtual lighting effect cast on the virtual content object.

11. The method of any of claims 1-10, further comprising:
while displaying the virtual content object and the virtual environment, detecting, via the one or more input devices, an input requesting display of web content according to a first mode; and
in response to detecting the input requesting display of the web content in the first mode:
ceasing display of the virtual environment; and
displaying, via the one or more displays, the web content according to the first mode.

12. The method of any of claims 1-11, wherein the virtual environment is displayed based on a mapping between an image that corresponds to the virtual environment projected onto a three-dimensional shape.

13. The method of any of claims 1-12, wherein the virtual content object is associated with the virtual environment based on metadata associated with a provider of web content included in the virtual content object indicating availability of the virtual environment to the electronic device.

14. An electronic device comprising:
one or more processors;
memory; and
one or more programs stored in the memory and configured to be executed by the one or more processors, the one or more programs including instructions for performing a method of any of claims 1-13.

15. A non-transitory computer readable storage medium storing one or more programs, the one or more programs comprising instructions, which when executed by one or more processors of an electronic device, cause the electronic device to perform a method of any of claims 1-13.
